Europäisches Patentamt

European Patent Office

Office européen des brevets

(19)

(11)  EP 0 931 102 B1

(12)  EUROPEAN PATENT SPECIFICATION

(45) Date of publication and mention
of the grant of the patent:
**30.05.2001  Bulletin 2001/22**

(51) Int Cl.[7]: **C08G 18/48**, C08G 18/10,
D01F 6/70

(21) Application number: **97912152.2**

(22) Date of filing: **09.10.1997**

(86) International application number:
**PCT/EP97/05558**

(87) International publication number:
**WO 98/16568 (23.04.1998 Gazette 1998/16)**

(54) **IMPROVED SPANDEX ELASTOMERS**

VERBESSERTE SPANDEX ELASTOMERE

ELASTOMERES DE TYPE SPANDEX PERFECTIONNES

(84) Designated Contracting States:
**BE DE ES FR GB IT NL SE**

(30) Priority: **11.10.1996  US 728920**
**11.10.1996  US 728922**
**11.10.1996  US 728923**

(43) Date of publication of application:
**28.07.1999  Bulletin 1999/30**

(73) Proprietor: **BAYER ANTWERPEN N.V.**
**4020 Antwerpen (BE)**

(72) Inventors:
 • **SENEKER, Stephen**
**Sissonville, WV 25320 (US)**

 • **LAWREY, Bruce, Apartment 15**
**Charleston, WV 25311 (US)**

(74) Representative: **Colmer, Stephen Gary et al**
**Mathys & Squire**
**100 Gray's Inn Road**
**London WC1X 8AL (GB)**

(56) References cited:
**EP-A- 0 408 201          WO-A-93/24549**
**WO-A-94/29360          US-A- 5 061 426**
**US-A- 5 100 997**

**Description**

**Technical Field**

The present invention pertains to diamine-extended polyurethane/urea elastomers. More particularly, the present invention pertains to diamine-extended spandex-type polyurethane/urea elastomers prepared from prepolymers derived from polyol components comprising ultra-low unsaturation polyoxyalkylene polyol.

**Background Art**

Polyurethane/urea elastomers in the form of fibers and films have found wide acceptance in the textile industry. The term "spandex", often used to describe these elastomers, refers to long chain synthetic polymers comprised of at least 85% by weight of segmented polyurethane. The term "elastane" is used in Europe. Spandex fibers are used for many different purposes in the textile industry, especially in underwear, form-persuasive garments, bathing wear, and elastic garments or stockings. The elastomeric fibers may be supplied as core spun elastomer yarns spun round with filaments or staple fiber yarns, or as staple fiber admixture to non-elastic fibers for the purpose of improving the wearing qualities of fabrics which are not in themselves highly elastic.

In the past, natural rubber thread was the only material available to provide elasticity to fabrics. Spandex, originally developed in the 1950s, has numerous advantages over rubber filaments. The most important of these is its higher modulus. Typically, for a given denier, spandex has at least twice the recovery, or retractive power, of rubber. This enables stretch garments to be manufactured containing less elastic fiber and thus be lighter in weight. Additional advantages over natural rubber include the ability to obtain spandex in much finer deniers, higher tensile strength and abrasion resistance, and in many cases, higher resilience. Additionally, spandex exhibits improved resistance to many cosmetic oils, to solvents, for example those used in dry cleaning, and a high resistance to oxidation and ozone as well. Furthermore, in contrast to rubber filaments, spandex fibers can be dyed relatively easily with certain classes of dyestuffs.

However, two areas where spandex fibers are inferior to rubber filaments are elongation and mechanical dynamic properties. Spandex fibers typically break at elongations of 500% while rubber filaments have elongations at break of 600 to 700%. In addition, rubber exhibits much lower hysteresis than spandex fibers. Hysteresis is a measure of the energy loss during stretching and retraction of an elastic material. A large energy loss implies heat generation and thus discomfort in wear. So there is a need in the industry for an elastic fiber with both the positive features of spandex such as high retractive power and the positive features of rubber such as high elongation and low hysteresis.

Another important physical property of elastic fibers is the "percent set" or "percent residual elongation," a measure of the fiber's ability to be stretched and then return to its original length. Any excess length is measured as percent set or residual elongation, and low values are desirable. Typical percent sets of spandex fibers are less than 30 percent, preferably less than 25 percent. It is particularly desirable to develop an elastic fiber with the positive features of spandex such as high retractive power, the positive features of rubber such as high elongation and low hysteresis, while retaining a low percent set.

The preparation of polyurethane/urea elastomers by the polyaddition process from high molecular weight, substantially linear polyhydroxy compounds, polyisocyanates and chain lengthening agents which have reactive hydrogen atoms by reaction in a highly polar organic solvents is already known. The formation of fibers, filaments, threads, and films from these solvent-borne polyurethane elastomers is also known. Reference may be made to U.S. patents 3,483,167 and 3,384,623, which illustrate the preparation of spandex fibers from isocyanate-terminated polymeric diols.

In commercial practice, the preferred polymeric diol is polytetramethylene ether glycol (PTMEG).

It has been known for some time that in principle, polyoxypropylene glycol (polypropylene glycol; "PPG") could also be used to prepare spandex fibers. U.S. Patent No. 3,180,854, for example, discloses a polyurethane/urea fiber based on a 2000 Da molecular weight polyoxypropylene -glycol. However, spandex based on polyoxypropylene glycols of 2000 Da molecular weight or lower have inferior percent sets. Higher molecular weight polyoxypropylene glycols made by conventional processes contain high percentages of terminal unsaturation or monofunctional hydroxyl-containing species ("monol"). The monol is believed by many to act as a chain terminator, limiting the formation of the required high molecular weight polymer during the chain extension reaction and therefore yielding products generally inferior in comparison to PTMEG derived elastomers. However, the role of monol as a chain terminator may be oversimplified, as several patents, e.g. U.S. patents 3,384,623 and 4,098,772 disclose preparation of elastomers with enhanced physical properties by purposeful addition of monol to polyurethane elastomer formulations, and in the case of spandex-type, diamine extended polyurethane/urea elastomers, it is generally necessary to add monofunctional chain terminators to limit polymer molecular weight and solution viscosity.

Thus, the properties of polyoxypropylene-derived spandex are generally inferior to those based on PTMEG, and polyoxypropylene glycols have not been utilized commercially in spandex production. See, e.g., the POLYURETHANE HANDBOOK (Gunther Oertel, Ed., Carl Hanser Verlag Pub., Munich 1985, p. 578: "Polypropylene glycols have so far been used as soft segments only in experimental products since they produce inferior elastanes".

The majority of polyoxyalkylene polyether polyols are polymerized through base catalysis. For example, polyoxypropylene diols are prepared by the base catalyzed oxypropylation of a difunctional initiator such as propylene glycol. During base catalyzed oxypropylation, a competing rearrangement of propylene oxide to allyl alcohol continually introduces an unsaturated, monofunctional, oxyalkylatable species into the reactor. The oxyalkylation of this monofunctional species yields allyl-terminated polyoxypropylene monols. The rearrangement is discussed in BLOCK AND GRAFT POLYMERIZATION, Vol. 2, Ceresa, Ed., John Wiley & Sons, pp. 17-21. Unsaturation is measured in accordance with ASTM D-2849-69 "Testing Urethane Foam Polyol Raw Materials," and expressed as milliequivalents of unsaturation per gram of polyol (meq/g).

Due to the continual creation of allyl alcohol and its subsequent oxypropylation, the average functionality of the polyol mixture decreases and the molecular weight distribution broadens. Base-catalyzed polyoxyalkylene polyols contain considerable quantities of lower molecular weight, monofunctional species. In polyoxypropylene diols of 4000 Da molecular weight, the content of monofunctional species may lie between 30 and 40 mol percent. In such cases, the average functionality is lowered to c.a. 1.6 to 1.7 from the nominal, or theoretical functionality of 2.0. In addition, the polyols have a high polydispersity, $M_w/M_n$ due to the presence of the substantial, low molecular weight fractions. Molecular weights and equivalent weights herein in Da (Daltons) are number average molecular weights and number average equivalent weights, respectively, unless specified otherwise.

Lowering unsaturation and the attendant high monol fraction in polyoxypropylene polyols has been touted as a means of providing polyurethane elastomers with improved properties. For example, use of polyols having low content of monofunctional species has been suggested as a method of increasing polymer molecular weight; and increased polymer molecular weight has, in turn, sometimes been cited as desirable in producing higher performance polymers. However, high molecular weight is not necessarily a desirable feature in many polymer systems. As indicated by G. Odian, PRINCIPLES OF POLYMERIZATION, John Wiley & Sons, © 1981, pp. 20-21, for example, often, the molecular weight to be desired is a moderate rather than a high molecular weight. In engineering thermoplastics, for example, higher molecular weights in general increase tensile strength, melt temperature, modulus, and the like, but if the molecular weight is too high, polymer viscosity becomes too great to process. In polyurethanes, molecular weights are far lower than engineering thermoplastics, and polymer morphology and physical properties are influenced by many factors, including amount and nature of hard segment, stereochemistry of isocyanate used, etc. Often, formulations must be chosen to balance conflicting properties. For example, increases in tensile strength are often accompanied by a decrease in elongation, and in the spinning of fibers from polymer solutions, high molecular weights frequently result in high viscosity solutions which are not spinnable without reducing solids content.

Reducing unsaturation in polyoxyalkylene polyols by lowering catalyst concentration and decreasing the reaction temperature is not feasible, as the reaction rate is so slow that oxypropylation takes days or even weeks, although low unsaturation polyols may be prepared in this manner. Thus, efforts have been expended to discover catalysts which can produce polyoxypropylated products in a reasonable amount of time with little introduction of monofunctionality due to allylic species. In the early 1960's, for example, double metal cyanide catalysts such as zinc hexacyanocobaltate complexes were developed as illustrated by U.S. Patent Nos. 3,427,256; 3,427,334; 3,427,335; 3,829,505; and 3,941,849. Despite lowering unsaturation to the range of c.a. 0.018 meq/g, the cost of these catalysts coupled with the necessity of lengthy and expensive catalyst removal steps prevented commercialization.

Use of alternative basic catalysts such as cesium hydroxide and rubidium hydroxide as disclosed in U.S. Patent No. 3,393,243, and the barium and strontium oxides and hydroxides, as disclosed in U.S. Patent Nos. 5,010,187 and 5,114,619, enabled modest improvements in unsaturation, however catalyst expense, and in some cases, toxicity, coupled with the but modest improvements offered, mitigated against commercialization. Catalysts such as calcium naphthenate and combinations of calcium naphthenate and tertiary amines have proven successful, as disclosed in U.S. Patent Nos. 4,282,387, 4,687,851 and 5,010,117, in preparing polyols with unsaturations as low as 0.016 meq/g, and more generally in the range of 0.02 to 0.04 meq/g.

In the 1980's, double metal cyanide complex (DMC) catalysts were once more revisited, and improvements in catalytic activity and catalyst removal methods encouraged one manufacturer to offer DMC catalyzed polyols having low unsaturations, i.e., in the range of 0.015 to 0.018 meq/g commercially for a brief time. However, base catalysis continued to be the major method of preparing polyoxypropylene polyols, and continues its dominance to the present day.

Recently, however, further major advances in DMC catalysts and polyoxyalkylation processes by the ARCO Chemical Co. have enabled practical preparation of ultra-low unsaturation polyoxypropylene polyols. High molecular weight polyols, for example those in the 4000 Da to 8000 Da molecular weight range, typically exhibit unsaturation in the range of 0.004 to 0.007 meq/g when catalyzed by the novel DMC catalysts. At these levels of unsaturation, the amount of monofunctional species is only 2 mol percent or less. Moreover, GPC analysis shows the polyols to be virtually monodisperse, often exhibiting polydispersities less than 1.10. Several such polyols have recently been commercialized as ACCLAIM™ polyols. The ultra-low unsaturation polyols have been found to be quantitatively different than both conventional polyols and low unsaturation polyols.

For example, Smith et al. U.S. patent 5,340,902 discloses spandex fibers prepared from polyoxypropylene diols having low unsaturation, less than 0.03 meq/g. Use of low unsaturation polyoxypropylene diols is stated therein to allow preparation of fibers with properties superior to PTMEG-derived spandex fibers. However, all the examples appear to be prophetic, and no physical properties are given. Moreover, as illustrated herein in Comparative Example C-1, 4000 Da polyoxypropylene glycols having an unsaturation of 0.015 meq/g as suggested for use by Smith in his "examples," lead to inferior spandex elastomers, and 2000 Da molecular weight ultra-low unsaturation polyoxypropylene glycols having an unsaturation of 0.0047, a much lower monol content than Smith's low unsaturation glycols, also failed to produce acceptable spandex elastomers. Reference may be had to Comparative Example C-3 in this regard. In the substantially contemporaneous publication co-authored by Smith: A.T. Chen et al., "Comparison of the Dynamic Properties of Polyurethane Elastomers Based on Low Unsaturation Polyoxypropylene Glycols and Poly(tetramethylene oxide) Glycols," POLYURETHANES WORLD CONGRESS 1993, October 10-13, 1993, pp. 388-399, conventional, base-catalyzed polyoxypropylene diols having normal (high) levels of unsaturation produced polyurethane/urea cast elastomers with physical properties virtually indistinguishable from those prepared from low unsaturation diols, as demonstrated by an actual comparison of physical properties of PTMEG-derived elastomers with those from conventional polyoxypropylene diols and low unsaturation polyoxypropylene diols. In Shore A 90 cast elastomers, PTMEG-MDI prepolymer-derived, butanediol-extended polyurethane elastomers had slightly lower modulus and elongation than low unsaturation polyoxypropylene diol-derived elastomers, however tensile strength of the PTMEG elastomers was considerably higher. For polyurethane/urea cast elastomers, a direct comparison was not possible, as the only PTMEG example used a 1000 Da PTMEG while both low unsaturation polyoxypropylene diol examples employed c. a. 2000 Da molecular weight diols. The PTMEG example had considerably higher physical properties with the exception of elongation, which was lower as expected due to the lower soft segment molecular weight. These results must be viewed with caution, however, as it is known that the physical properties of spandex-type elastomers cannot be compared to cast or one shot elastomers.

PTMEG is a solid at room temperature and yields MDI prepolymers of extremely high viscosity. Additionally, the spandex produced with PTMEG has relatively low elongation, about 500%, and exhibits high hysteresis in comparison to rubber. Yet, despite the inherent difficulties of handling PTMEG and unsatisfactory elongation and hysteresis, PTMEG continues to be the mainstay of spandex production.

It would be desirable to provide spandex elastomers with improved physical properties, particularly one or more of elongation, tensile strength, hysteresis, percent set prepolymer viscosity and viscosity of chain-extended polymer solutions, while maintaining other physical properties.

We have now found in accordance with the present invention that significant improvements in one or more of such properties are attainable by deriving the prepolymer from a polyol component which includes one or more ultra low unsaturation polyoxypropylene diols. By ultra low unsaturation is meant that the diol contains 0.010 meq/g unsaturation or less. The dramatic increase in physical properties through use of ultra-low unsaturation polyoxypropylene glycols is particularly surprising in view of the fact that amine-cured elastomers based on low unsaturation polyols disclosed in the prior art show virtually no improvement in physical properties as compared to elastomers prepared from conventional, "high" unsaturation polyols.

In accordance with a first aspect of the invention, it has been surprisingly discovered that spandex elastomers based on isocyanate-terminated prepolymers derived from a polyol component prepared by the addition of low molecular weight glycols or polyoxypropylene oligomers having molecular weights below 750 Da to ultra-low unsaturation polyoxypropylene glycols having molecular weights in excess of 1500 Da, results in astounding increases in elongation and recovery power, while maintaining or improving other properties such as percent set and hysteresis.

According to this first aspect of the present invention there is provided a process for the preparation of an aliphatic diamine and/or cycloaliphatic diamine-extended, segmented polyurethane/urea spandex elastomer, comprising contacting one or more diamine chain extenders substantially comprising one or more aliphatic diamines and/or cycloaliphatic diamines with a solution of an isocyanate-terminated prepolymer in an aprotic solvent, said isocyanate-terminated prepolymer comprising the reaction product of:

    a) a stoichiometric excess of an isocyanate component comprising one or more diisocyanates;
    b) a glycol component comprising,

        b)i) a high molecular weight glycol component comprising in major part, one or more ultra-low unsaturation polyoxypropylene glycols having a molecular weight of between about 1500 Da and 20,000 Da and an unsaturation less than about 0.010 meq/g, and
        b)ii) a low molecular weight diol having a molecular weight less than 750 Da, such that the average molecular weight of said glycol component is from about 1000 Da to 10,000 Da,

to form a diamine chain extended polyurethane/urea spandex elastomer polymer.

Also provided is the amine-extended, segmented polyurethane/urea spandex polymer thereby obtained. Yet further provided is a reaction spinning process which comprises introducing the above-defined isocyanate-terminated prepolymer into a chain extender solution containing one or more aliphatic diamines and/or cycloaliphatic diamines dissolved in a volatile solvent;

c) withdrawing from said chain extender solution an amine-extended, segmented polyurethane/urea elastomer; and

d) volatilizing any residual volatile solvent container in said amine-extended, segmented polyurethane elastomer.

In accordance with a second aspect of the invention, it has been surprisingly discovered that spandex elastomers based on isocyanate-terminated prepolymers derived from a polyol component comprising in most major part, an admixture of one or more PTMEGs and one or more ultra-low unsaturation polyoxypropylene glycols having molecular weights greater than about 1500 Da results in unexpected improvement in percent set, prepolymer viscosity, and most particularly, hysteresis, while substantially retaining retractive power and tensile strength. The increase in physical properties through use of ultra-low unsaturation polyoxypropylene glycols together with PTMEG is particularly surprising in view of the fact that amine-cured cast elastomers based on low unsaturation polyols disclosed in the prior art show virtually no improvement in physical properties as compared to elastomers prepared from conventional, "high" unsaturation polyols or to PTMEG-derived elastomers. Moreover, the novel prepolymers display lower prepolymer and polymer solution viscosities than PTMEG-derived prepolymers of the same solids content. This lower viscosity allows the solids content to be raised while retaining processability, thereby increasing fiber throughput.

According to this second aspect of the invention, there is provided a process for the preparation of a segmented polyurethane/urea spandex elastomer, comprising reacting in solution in a solvent:

a) an isocyanate-terminated prepolymer prepared by reacting a stoichiometric excess of one or more di- or polyisocyanates, so as to provide a free NCO group content of said prepolymer of from about 0.5% by weight to about 10% by weight based on prepolymer weight, with a polyol component comprising in most major part a diol component, said diol component comprising from about 5 equivalent percent to about 50 equivalent percent of one or more ultra-low unsaturation polyoxypropylene diols having a molecular weight in excess of about 1500 Da and an average unsaturation of less than about 0.010 meq/g, and from about 95 equivalent percent to about 50 equivalent percent of one or more polytetramethylene ether glycols having a molecular weight of from about 600 Da to about 6000 Da; with

b) a diamine chain extender comprising one or more aliphatic diamines, cycloaliphatic diamines, or mixtures thereof to form an aliphatic diamine and/or cycloaliphatic diamine chain extended spandex elastomer reaction product; and

c) removing said solvent from said reaction product.

Also provided is the segmented polyurethane/urea spandex elastomer thereby obtained.

Yet further provided is a process for the reduction of PTMEG contained in the soft segments of segmented, polyurethane/urea spandex polymers without substantial loss of unload power or percent set, or for the reduction of viscosity of isocyanate-terminated PTMEG prepolymers prepared by reacting a stoichiometric excess of one or more di- or polyisocyanates with PTMEG, comprising substituting for from 5 equivalent percent to 50 equivalent percent of PTMEG one or more ultra-low unsaturation polyoxypropylene polyols having molecular weights from about 1500 Da to 20,000 Da and an average unsaturation less than 0.010 meq/g.

In accordance with a third aspect of the invention, it has been surprisingly discovered that the preparation of spandex elastomers from isocyanate-terminated prepolymers derived from a polyol component comprising in most major part, one or more ultra-low unsaturation polyoxypropylene glycols having molecular weights greater than 2000 Da, results in astounding increases in tensile strength, percent set, recovery power, and hysteresis, while showing modest but significant improvement in elongation as compared to otherwise similar spandex based on low monol polyoxypropylene glycols.

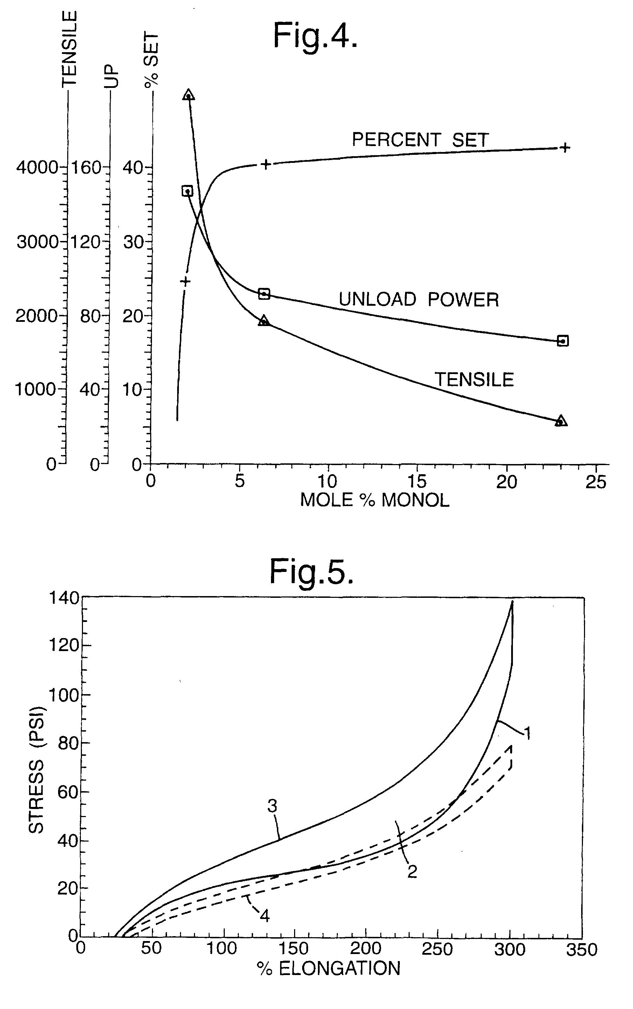

The spandex elastomers according to this third aspect of the invention also provide dramatic improvements in elongation and hysteresis as compared with PTMEG-derived spandex materials. In addition, and as illustrated in Figure 5, the stretch resistance (load power) of the subject invention spandex is lower than PTMEG-derived spandex, which translates to greater comfort and easier to don garments which are also easier to move in. Yet, at the same time, the subject invention spandex exhibits low hysteresis and high retractive (unload) power. Moreover, the novel prepolymers display lower prepolymer viscosities as well as lower polymer solution viscosities than PTMEG-derived polymer solutions of the same solids content. This lower solution viscosity allows the solids content to be raised while remaining processable, thereby increasing fiber throughput.

According to the third aspect of the invention, there is provided a process for the preparation of a segmented polyurethane/urea spandex-type elastomer, comprising:

a) selecting an isocyanate-terminated prepolymer prepared by reacting a stoichiometric excess of one or more di- and/or polyisocyanates with a polyoxypropylene diol component having a molecular weight in excess of 2000 Da and an unsaturation of about 0.010 meq/g or less, said polyoxypropylene diol component comprising in most major part, one or more ultra-low unsaturation polyoxypropylene diols having an unsaturation of less than about 0.010 meq/g, and a molecular weight of about 2500 Da to about 20,000 Da, said isocyanate-terminated prepolymer having an isocyanate group content of from about 0.5 weight percent to about 10 weight percent;

b) preparing a solution of said isocyanate-terminated prepolymer in an aprotic solvent;

c) chain extending said isocyanate-terminated prepolymer with a substantially aliphatic and/or cycloaliphatic diamine component to form a segmented polyurethane/urea elastomer.

Also provided is the spandex elastomer thereby obtained.

In an alternative embodiment of this aspect of the invention, the isocyanate-terminated prepolymer is spun into a chain-extender solution prepared by dissolving one or more aliphatic diamine and/or cycloaliphatic diamine chain extender(s) in a volatile solvent, to form a chain-extended spandex elastomer which is withdrawn from the solutions.

The invention will now be described in greater detail by reference, in turn, to each of the above-mentioned first, second and third aspects and with the aid of the accompanying drawings in which

FIGURE 1 illustrates hysteresis curves for several spandex-type elastomers.

FIGURE 2 illustrates the relationship of elastomer elongation to mole percent monol;

FIGURE 3 illustrates the expected extrapolated values of percent set, unload power, and tensile strength relative to unsaturation based on the relationship of elongation to unsaturation;

FIGURE 4 illustrates the actual relationship of percent set, unload power, and tensile strength to monol content, showing the unexpected change in the relationship at an unsaturation of about 0.010 meq/g; and

FIGURE 5 compares the hysteresis curves of a PTMEG derived spandex with a spandex of the subject invention.

The spandex-type elastomers of the subject invention must be prepared by a prepolymer process. In such processes, a polyol component, generally composed essentially of diols, is reacted with an excess of diisocyanate, to yield an isocyanate-terminated prepolymer containing a relatively low isocyanate content. The prepolymers are then chain extended in solution with an aliphatic or cycloaliphatic diamine to form the final elastomer. Extrusion of the prepolymer into a water bath containing a diamine chain extender is sometimes used, as the diamine is far more reactive than water. Solvents other than water may be used as well, e.g. toluene.

Spandex elastomers prepared by chain extension in solution using isocyanate-terminated prepolymers or by the reactive spinning process cannot be compared with elastomers prepared by one-shot or quasi-prepolymer processes, as both of the latter introduce a significant amount of randomness in the polymer structure. Furthermore, neat processes cannot be used with aliphatic and cycloaliphatic diamines as the reactivity of these diamines is far too fast. The unusual strength and elongation properties of spandex-type elastomers are believed due to the uniform distribution of hard segments within the polymer matrix and to the very polar aliphatic urea hard segments they contain. These hard segments are believed to interact with one another through hydrogen bonding and, in some cases, crystallinity, and behave like cross-links or reinforcing fillers. Those skilled in the art of spandex polymers are aware of the processes used to prepare such. Reference may be made, for example, to U.S. patents 3,384,623; 3,483,167; and 5,340,902, which are herein incorporated by reference.

## THE ISOCYANATE COMPONENT

Both aliphatic and aromatic di- and polyisocyanates may be used to prepare the spandex prepolymers. In general, diisocyanates are preferred, however it is within the scope of the invention to include a minor amount, i.e., not more than approximately 20 mol percent, of a tri- or higher-functionality isocyanate. Preferred isocyanates are identified in the references previously cited, and by way of example, but not by way of limitation, include linear aliphatic isocyanates such as 1,2-ethylene diisocyanate, 1,3-propylene diisocyanate, 1,4-butylene diisocyanate, 1,6-hexylene diisocyanate, 1,8-octylene diisocyanate, 1,5-diisocyanato-2,2,4-trimethylpentane, 3-oxo-1,5-pentane diisocyanate, and the like; cycloaliphatic diisocyanates such as isophorone diisocyanate, the cyclohexane diisocyanates, preferably 1,4-cyclohexane diisocyanate, fully hydrogenated aromatic diisocyanates such as hydrogenated tetramethylxylylene diisocyanate, hydrogenated toluene diisocyanates, and hydrogenated methylene diphenylene diisocyanates; and aromatic diisocyanates such as the toluene diisocyanates, particularly the 2,4-isomer, the methylene diphenylene diisocyanates, particularly 2,4'-and 4,4'-methylene diphenylene diisocyanate (2,4'- and 4,4'-MDI, respectively), tetramethylxylylene diisocyanate, and the like. Less preferred aromatic diisocyanates include the polymethylene polyphenylene polyisocyanates having functionalities greater than two. Also preferred are modified diisocyanates prepared by reacting one or more diisocyanates with themselves, or with a low molecular weight isocyanate reactive compound to form urea-modified, urethane-modified, carbodiimide-modified, allophanate-modified, uretonimine-modified, biuret-modified, and other modified isocyanates, many of which are commercially available. More than one isocyanate may be used. Particularly preferred is 4,4'-MDI.

THE POLYOL COMPONENT

A critical component of the spandex elastomer of this aspect of the subject invention is the polyol component used to prepare the isocyanate-terminated prepolymer. This polyol component must comprise one or more high molecular weight, ultra-low unsaturation polyoxypropylene polyols, in conjunction with one or more low molecular weight diols, the blend of high molecular weight and low molecular weight components such that the average molecular weight of the polyol component is from about 1000 Da to about 10,000 Da, preferably 1250 Da to 5,000 Da, and most preferably about 1500 Da to 2500 Da.

THE UNSATURATION OF THE HIGH MOLECULAR WEIGHT POLYOXYPROPYLENE POLYOL COMPONENT

The unsaturation of the high molecular weight polyol component is also critical. This polyol component must comprise, in major part, i.e., at least 70 weight percent based on the weight of the high molecular weight polyol component, of an ultra-low unsaturation polyoxypropylene polyol. Most preferably, the entire high molecular weight polyol component has an unsaturation of less than 0.010 meq/g, more preferably less than 0.007 meq/g, and most preferably about 0.005 meq/g or lower. However, it would not depart from the spirit of the invention to include a minor portion of high molecular weight polyoxypropylene polyol which as a somewhat higher unsaturation, for example, but not by way of limitation, up to about 30 weight percent of a polyoxypropylene polyol having an unsaturation of about 0.015 to 0.020 meq/g. In such cases, the actual unsaturation of the high molecular weight polyol component may be slightly higher than 0.010 meq/g. However, as long as the most substantial part, i.e., 70 weight percent or more, of the high molecular weight polyol component comprises an ultra-low unsaturation polyoxypropylene diol, the beneficial results of the invention may be obtained.

THE ULTRA LOW UNSATURATION POLYOXYPROPYLENE GLYCOL

Thus, by the term "ultra-low unsaturation polyoxypropylene glycol," is meant a polymer glycol prepared by oxypropylating a dihydric initiator with propylene oxide in the presence of a catalyst such that the total unsaturation of the polyol product is less than 0.010 meq/g. Preferably, the catalyst is a double metal cyanide catalyst such as those disclosed in U.S. patents 5,470,813 and 5,482,908. Through the use of the catalyst disclosed in these references, unsaturations in the range of 0.004 to 0.008 are routinely achieved. The polyoxypropylene glycol may contain oxyethylene moieties distributed randomly or in block fashion. If the oxyethylene moieties are contained in a block, the block is preferably a terminal block. However, randomly distributed oxyethylene moieties are preferred when such moieties are present. In general, the polyoxypropylene glycol should contain about 30 weight percent or less of oxyethylene moieties, preferably 20 percent or less, and more preferably about 10 percent or less. The polyoxypropylene glycol may also contain higher alkylene oxide moieties such as those derived from 1,2- and 2,3-butylene oxide and other higher alkylene oxides, or oxetane. The amount of such higher alkylene oxides may be as much as 10-30% by weight of the polyoxypropylene polyol. However, preferably, the polyoxypropylene polyol is substantially derived from propylene oxide or propylene oxide in admixture with minor amounts of ethylene oxide. All such glycols, provided they comprise oxypropylene moieties in major part, are polyoxypropylene glycols that term is employed herein.

The high molecular weight, ultra-low unsaturation polyoxypropylene glycol has a molecular weight of at least about 1500 Da and may range up to 20,000 Da or higher. Preferably, the molecular weight is in the range of 2000 Da to 10,000 Da, and more preferably in the range of 3000 Da to 8000 Da. Molecular weights and equivalent weights herein are number average molecular weights and equivalent weights unless specified otherwise. It is possible to use a blend of more than one high molecular weight polyoxypropylene polyol. However, when such blends are used, the average molecular weight of the blend of high molecular weight components should be within the ranges previously stated. The polyoxypropylene glycol component further may include minor amounts of higher functionality polyols, particularly polyoxypropylene triols and polyoxypropylene tetrols which may be advantageously added to adjust the viscosity or the spinnability of the prepolymer or prepolymer solution. Preferably, the fibers are prepared from substantially all difunctional polyols, i.e., polyoxypropylene glycol-derived. The polyol component may also contain a minor amount of higher functional polyols such as, but not limited to, ultra-low unsaturation triols and tetrols.

## THE LOW MOLECULAR WEIGHT DIOL

The low molecular weight diol component must have a molecular weight less than 750 Da. Preferably, the molecular weight is less than 500 Da, and more preferably, less than 200 Da. The low molecular weight component may be monomeric, i.e., an alkylene glycol, or may be oligomeric, i.e., a polyoxyethylene glycol or polyoxypropylene glycol. Preferably, low molecular weight glycol ethers such as diethylene glycol or tripropylene glycol are utilized. Non-limiting examples of suitable low molecular weight components include aliphatic glycols such as ethylene glycol, 1,2- and 1,3-propanediol,1,4-butanediol,2,2,4-trimethylpentane-1,5-diol, 1,6-hexanediol, 1,8-octanediol, and the like; aliphatic ethers such as diethylene glycol, triethylene glycol, dipropylene glycol, tripropylene glycol, and the like; and oligomeric polyoxyalkylene diols such as polyoxyethylene diols, polyoxypropylene diols, and block and random polyoxyethylene/polyoxypropylene diols having molecular weights less than 750 Da, preferably less than or equal to 500 Da, and more preferably about 200 Da or lower. More than one low molecular weight diol may be used. Up to about 20 weight percent of a tri- or higher functionality species such as trimethylolpropane, glycerine, or low molecular weight polyoxypropylene triols may also be included.

## PREPARATION OF THE PREPOLYMER

The high molecular weight, ultra-low unsaturation polyoxypropylene glycol and the low molecular weight diol are blended in proportion such that the number average molecular weight of the blend is between 1000 Da and 10,000 Da, preferably between 1250 Da and 5000 Da and more preferably between 1500 Da and 2500 Da. Following preparation of the polyol blend, the blend is reacted with an excess of the desired diisocyanate, preferably under a nitrogen atmosphere at slightly elevated temperature, i.e., between 50°C and 100°C, more preferably between 60°C and 90°C. The reaction of the isocyanate with the polyol may be catalyzed, but is generally preferred that the reaction take place without catalysis. In general, the reaction proceeds until the point where the isocyanate content becomes constant. The isocyanate-terminated prepolymer, which in this aspect of the present invention, preferably has an isocyanate content of from 0.5 to 8%, preferably from 2 to 4%, is then generally extruded into a bath containing diamine extender, or dissolved in a polar aprotic solvent such as dimethyl acetamide, dimethyl formamide, dimethyl sulfoxide, N-methyl pyrollidone, or the like, and then chain-extended with a diamine as discussed in the references cited previously. By the term "polar aprotic solvent" as used herein is meant a solvent having the capability to dissolve the chain extended polyurethane at the desired concentration while being essentially non-reactive to isocyanate groups.

The reaction spinning process accounts for a minor amount of spandex production, however, the prepolymers of this aspect of the invention are well suited for use therein also. In reaction spinning, the isocyanate terminated prepolymer itself is spun into strands, which are then passed into a bath containing diamine chain extender. While water solutions of aliphatic diamines have been used, it is generally more expedient to dissolve the diamine chain extender in a more volatile solvent such as toluene. Since the prepolymer itself is being spun in the reaction spinning process, prepolymer viscosity must be kept high to prevent dissipation of prepolymer into the solvent and to prevent strand breakage. To achieve the necessary high viscosity, up to about 10 weight percent of the entire polyol component of the prepolymer, preferably about 2-7 weight percent of the polyol component, may be replaced with a low molecular weight triol such as glycerine or trimethylolpropane or their lower oxyalkylated oligomers. The addition of these amounts causes a large increase in prepolymer viscosity, rendering the prepolymer spinnable.

Those skilled in the art of spandex polymers are aware of the processes used to prepare such. Reference may be made, for example, to U.S. patents 3,384,623; 3,483,167; and 5,340,902, which are herein incorporated by reference.

The polymer thus obtained has both hard and soft segments. The terms "soft segment" and "hard segment" refer to specific portions of the spandex polymer chains. The soft segments are the polyether-based portions of the segmented polyurethane/urea polymer, derived from the polyoxypropylene glycol. The hard segments refer to the portions of the polymer chains that are derived from the diisocyanate and chain extender. The term "NCO content" refers to the isocyanate group content of the prepolymer, before chain extension. The term "molecular weight" means number average molecular weight unless indicated otherwise. The number average molecular weights for the polyether glycols are each determined from the hydroxyl number of the polyether glycol as measured by the imidazole-pyridine catalyst method described by S.L. Wellon et al., "Determination of Hydroxyl Content of Polyurethane Polyols and Other Alcohols", ANALYTICAL CHEMISTRY, Vol. 52, No. 8, pp. 1374-1376 (July 1980).

## THE AMINE CHAIN EXTENDER

Suitable chain extenders include, but are not limited to, ethylene diamine, 1,3-propylene diamine, hydrazine, piperazine, tetramethylene diamine, cyclohexylene-1,3-diamine (hydrogenated m-phenylene diamine), isophorone diamine, or mixtures of these diamines. Preferred are mixtures containing ethylene diamine as the major component.

Ethylene diamine as the sole chain extender is particularly preferred. Other diamine chain extenders useful in the present invention include diethyltoluene diamine, 4,4'-methylenebis(2-chloroaniline)("MOCA"),1,4-diamino-2-methylpiperazine, 1,4-diamino-2,5-dimethylpiperazine, and methyl bispropylamine, substituted aromatic diamines such as the product commercially available as UNI-LINK 4200, a product of UOP, Inc., N,N-bis(2-hydroxypropyl)aniline commercially available as ISONOL 100, a product of Dow Chemical Corporation, and combinations thereof. Aromatic diamines should be used in most minor amounts. Most preferably, the diamine chain extender comprises substantially aliphatic and/or cycloaliphatic diamines. By "substantially" in this respect is meant in excess of 70 weight percent based on total chain extender weight. Minor portions of diol chain extenders such as those traditionally used in other elastomers may be added under appropriate circumstances, however, use of diol chain extenders is not preferred. Such diol chain extenders include ethylene glycol, propylene glycol, 1,4-butanediol, 1,6-hexanediol, diethylene glycol, dipropylene glycol, and the like. It is highly preferred that the greatest part of the chain extender, i.e. greater than 90 weight percent and more preferably greater than 95 weight percent, be aliphatic and/or cycloaliphatic diamine(s).

CHAIN TERMINATORS

Chain terminators may be included in the reaction mixture to adjust the final molecular weight, and thus the intrinsic viscosity, of the polyurethane/urea polymer to the desired value. Usually, the chain terminators are monofunctional compounds such as secondary amines, for example diethylamine or dibutylamine, or hydroxyl or thiol functional compounds such as n-butanol or dodecane thiol. The terminator content is adjusted such that the resultant spandex polymer, dissolved in a polar, aprotic solvent, has a viscosity in the range of 100 to 10,000 poise at 25°C, preferably 150 to 5000 poise at 10-50% solids, preferably 25-45% solids. The polymer should have an intrinsic viscosity in the range of 0.75 to 2.5 dL/g, preferably 1.0 to 1.8 dL/g, when measured at 25°C in N,N-dimethylacetamide at a concentration of 0.5 grams per 100 milliliters of solution.

In the commercial production of spandex fibers by spinning from aprotic solvent, solvent removal is the rate limiting step. Due to the high viscosity of PTMEG-derived polymer solutions, solution solids are generally limited to a maximum of 25 to 30 weight percent or thereabouts, and thus considerable solvent must be removed from the spun fibers. Polar aprotic solvents tend to have relatively low volatility, and thus removal of some 80% of solvent from the spun fiber strands is a real impediment to increased fiber production rate. It has surprisingly and unexpectedly been found that prepolymer viscosities of the prepolymers of this second aspect of the invention are considerably lower than those of otherwise similar prepolymers based on PTMEG. As polymer solution viscosities often parallel prepolymer viscosities, the subject invention prepolymers offer the possibility of increased throughput.

For a discussion of the isocyanate components that may be employed in this second aspect of the invention, reference should be made to the corresponding discussion under the first aspect under the heading "THE ISOCYANATE COMPONENT".

A critical component of the spandex elastomer of this second aspect of the invention is the polyol component used to prepare the isocyanate-terminated prepolymer. This polyol component must comprise one or more high molecular weight, ultra-low unsaturation polyoxypropylene polyols, in admixture with one or more PTMEGs. The unsaturation of the high molecular weight polyoxypropylene polyol component is critical and reference is made in this respect to the section entitled "THE UNSATURATION OF THE HIGH MOLECULAR WEIGHT POLYOXYPROPYLENE POLYOL COMPONENT" in the discussion above of the first aspect of the invention.

The term "ultra-low unsaturation polyoxypropylene glycol" has the same meaning as in the first aspect of this invention and for a discussion of this component of the prepolymer reference is made to the section found hereinbefore and headed "THE ULTRA LOW UNSATURATION POLYOXYPROPYLENE GLYCOL".

For this second aspect of the invention, however, the high molecular weight, ultra-low unsaturation polyoxypropylene glycol has a molecular weight about 1500 Da or greater, preferably at least about 2000 Da, and may range up to 20,000 Da or higher. Preferably, the molecular weight is in the range of 3000 Da to 8,000 Da, and more preferably in the range of 4000 Da to 8000 Da.

It is possible to use a blend of more than one high molecular weight polyoxypropylene polyol, or to add low molecular weight diols in minor quantity. However, when such blends are used, the average molecular weight of the blend of high molecular weight components should be at least 1500 Da and otherwise within the ranges previously stated. The polyoxypropylene glycol component further may include minor amounts of higher functionality polyols, particularly non-oligomeric polyoxypropylene triols and polyoxypropylene tetrols having molecular weights greater than 500 Da, which may be advantageously added to adjust the viscosity or the spinnability of the prepolymer or prepolymer solution. Preferably, the prepolymers are prepared from substantially all difunctional polyols, i.e., are polyoxypropylene glycol-derived. The term "polyoxypropylene glycol" as used herein includes a minor amount, i.e., up to about 20 weight percent or more of a high molecular weight, ultra-low unsaturation triol or tetrol.

THE POLYTETRAMETHYLENE ETHER GLYCOL

The polytetramethylene ether glycol (PTMEG) utilized herein has a molecular weight of greater than 600 Da and preferably greater than 1000 Da. Most preferably, PTMEGs in the range of 1300 Da to 3000 Da are used. It should be noted that molecular weights and equivalent weights expressed herein in Daltons (Da) are number average molecular weights and equivalent weights unless otherwise specified.

The PTMEGs are prepared by traditional methods, i.e. by the Lewis acid catalyzed polymerization of tetrahydrofoam. Suitable polymerization catalysts are, for example, anhydrous aluminum chloride, and particularly boron trifluoride · etherate. Such catalysts are well known and are the subject of numerous patents and publications. PTMEG polyols are commercially available in a variety of molecular weights from numerous sources, for example as Terathane® polyols from DuPont; as PolyTHF from BASF Corporation; and as POLYMEG® from QO Chemical, Inc. Most preferably, the PTMEG has a number average molecular weight between 600 and 6000 Da, preferably between 1000 Da and 4000 Da, and most preferably between 1300 and 3000 Da.

The polyol component used herein contains predominately a diol component, the diol component comprising preferably from about 95 equivalent percent to about 50 equivalent percent PTMEG, and more preferably from about 95 equivalent percent to about 65 equivalent percent PTMEG, the remainder of the diol component preferably being a polyoxypropylene diol component having an average unsaturation of less than about 0.010 meq/g, preferably less than about 0.007 meq/g, and most preferably about 0.005 meq/g or lower. By the term "in most major part" and like terms is meant about 85% by weight or more relative to the weight of the polyol component.

It would not depart from the spirit of the invention to further include polyoxypropylene diols outside this molecular weight range, as long as the overall average unsaturation is about 0.010 meq/g or lower. For example, it would be acceptable to provide a mixture containing c.a. 50 mol percent of ultra-low unsaturation polyoxypropylene diol having an unsaturation of about 0.007 meq/g or less with about c.a. 50 mol percent of a low unsaturation polyoxypropylene diol having an unsaturation of about 0.015 meq/g. Normally catalyzed, i.e. base catalyzed diols of higher unsaturation could, of course, be used in lesser quantities.

The diol component thus comprises one or more PTMEG diols and one or more polyoxyalkylene diols such that the average unsaturation of the polyoxyalkylene diol portion of the diol component is less than about 0.010 meq/g. The polyol component comprises the diol component and any other hydroxyl or other reactive functional species which, together with the diol component, will form the isocyanate-terminated prepolymer following reaction with the isocyanate component. Preferably, the components of the polyol component other than the PTMEG and polyoxypropylene diols may comprise one or more low molecular weight glycols or their oxyalkylated oligomers, or one or more triols, tetrols, or the like, or their oxyalkylated oligomers. Triols and higher functional monomeric polyols and their polyoxyalkylated oligomers, i.e. those up to a molecular weight of c.a. 500 Da., may be used to provide improved processing. This is particularly true when the reactive spinning process is utilized, as described hereafter, where up to 10-15 weight percent, preferably from up to about 10 weight percent, and more preferably up to about 7 weight percent of the polyol component may comprise a low molecular weight polyol, particularly a monomeric polyol such as glycerol or trimethylolpropane.

To prepare the prepolymer, the polyol component is reacted with an excess of the desired diisocyanate. For a discussion of the reaction conditions, refer to the passage headed "PREPARATION OF THE PREPOLYMER" in the discussion of the first aspect of the invention. However, in this second aspect, the amount of excess isocyanate is selected so as to provide a % NCO group content in the prepolymer of between about 0.5 weight percent and 10 weight percent, preferably between 1 weight percent and 4 weight percent, and most preferably between about 2 and 4 weight percent. The reaction of the isocyanate with the polyol may be catalyzed with standard catalysts such as dibutyltin dilaurate, but may take place without catalysis. In general, the reaction proceeds until the point where the isocyanate content becomes constant. The isocyanate-terminated prepolymer is then generally dissolved in a polar aprotic solvent such as dimethyl acetamide, dimethyl formamide, dimethyl sulfoxide, N-methylpyrrolidone, or the like, and then chain-extended with a diamine as discussed, and as further discussed in the references cited previously.

The prepolymers of this second aspect of the invention are also well suited for use in the reaction spinning process described above.

As in the first aspect of the invention, the polymer thus obtained has both hard and soft segments but in this case the soft segments are the polyether-based portions derived from the PTMEG and the polyoxypropylene glycol. For a discussion of the amine chain extenders suitable in this second aspect of the invention, refer to the discussion above under the heading "THE AMINE CHAIN EXTENDER"; however in this second aspect of the invention, the term "substantially aliphatic or cycloaliphatic" means that at least about 70 mol percent of total diamine chain extender is an aliphatic diamine and/or a cycloaliphatic diamine.

Chain terminators as described in connection with the first aspect of the invention are generally included in the reaction mixture to adjust the final molecular weight, and thus the intrinsic viscosity, of the polyurethane/urea polymer to the desired value.

## THE THIRD ASPECT OF THE INVENTION

As stated hereinbefore, in the commercial production of spandex fibers by spinning from aprotic solvent, solvent removal is the rate limiting step. It has surprisingly and unexpectedly been found that polymer solution viscosities of the ultra-low unsaturation polyoxypropylene-derived spandex of this third aspect of the invention are much lower than solution viscosities of PTMEG-derived polymers. Moreover, in at least one case, spandex polymer of this third aspect exhibited lower solution viscosity even though having a molecular weight approximately 30% higher than the PTMEG-derived polymer.

For a discussion of the isocyanate components that may be employed in this third aspect of the invention, reference should be made to the corresponding discussion under the first aspect under the heading "THE ISOCYANATE COMPONENT".

A critical component of the spandex elastomer of this third aspect of the invention is the polyol component used to prepare the isocyanate-terminated prepolymer. This polyol component must comprise one or more high molecular weight, ultra-low unsaturation polyoxypropylene polyols. The unsaturation of the high molecular weight polyol component is critical and reference is made in this respect to the section entitled "THE UNSATURATION OF THE HIGH MOLECULAR WEIGHT POLYOXYPROPYLENE POLYOL COMPONENT" in the discussion above of the first aspect of the invention.

The term "ultra-low unsaturation polyoxypropylene glycol," has the same meaning as in the first aspect of this invention and for a discussion of this component of the prepolymer reference is made to the section found hereinbefore and headed "THE ULTRA LOW UNSATURATION POLYOXYPROPYLENE GLYCOL".

For this third aspect of the invention, however, the high molecular weight, ultra-low unsaturation polyoxypropylene glycol has a molecular weight greater than 2000 Da, preferably at least about 2500 Da, and may range up to 20,000 Da or higher. Preferably, the molecular weight is in the range of 3000 Da to 10,000 Da, and more preferably in the range of 3000 Da to 8000 Da. It is possible to use a blend of more than one high molecular weight polyoxypropylene polyol, or to add low molecular weight diols in minor quantity. However, when such blends are used, the average molecular weight of the blend of high molecular weight components should be at least 2000 Da and otherwise within the ranges previously stated. The polyoxypropylene glycol component further may include minor amounts of higher functionality polyols, particularly polyoxypropylene triols and polyoxypropylene tetrols which may be advantageously added to adjust the viscosity or the spinnability of the prepolymer or prepolymer solution. Preferably, the fibers are prepared from substantially all difunctional polyols, i.e., polyoxypropylene glycol-derived. The term "polyoxypropylene glycol" as used herein includes a minor amount, i.e., up to about 20 weight percent or more of a high molecular weight, ultra-low unsaturation triol or tetrol, particularly in the case of reaction spinning as discussed hereafter.

To prepare the prepolymer, the high molecular weight, ultra-low unsaturation polyoxypropylene glycol is reacted with an excess of the desired diisocyanate. For a discussion of the reaction conditions, refer to the passage headed "PREPARATION OF THE PREPOLYMER" in the discussion of the second aspect of the invention. However, in this third aspect, the amount of excess isocyanate is selected so as to provide a % NCO group content in the prepolymer of between about 0.5 weight percent and 10 weight percent, preferably between 2 weight percent and 4 weight percent.

The prepolymers of this third aspect of the invention are also well suited for use in the reaction spinning process described above.

As in the first aspect of the invention, the polymer thus obtained has both hard and soft segments but in this case the soft segments are the polyether-based portions of the segmented polyurethane/urea polymer, derived from the polyoxypropylene glycol.

For a discussion of the amine chain extenders suitable in this third aspect of the invention, refer to the discussion above under the heading "THE AMINE CHAIN EXTENDER"; however in this third aspect of the invention, the term "substantially aliphatic or cycloaliphatic" means that at least about 70 mol percent of total diamine chain extender is an aliphatic diamine and/or a cycloaliphatic diamine.

Chain terminators as described in connection with the first aspect of the invention are generally included in the reaction mixture to adjust the final molecular weight, and thus the intrinsic viscosity, of the polyurethane/urea polymer to the desired value.

The following Examples illustrate the invention.

## Examples

The following procedure was used to prepare the elastic polymer. The polyol or mixture of polyols employed in the formation of the prepolymer was mixed with 4,4'-diphenyl methane diisocyanate (4,4-'MDI) and heated for about 8 hours at 80°C to yield the appropriate isocyanate-terminated polyether prepolymer (i.e., isocyanate capped glycol). The prepolymer was then mixed with dimethylacetamide (DMAc) for about 2 minutes to form a solution containing about 21.3% solids. Then, while the prepolymer solution was still being mixed, a mixture of ethylene diamine (EDA) chain extender and diethylamine (DEA) chain terminator dissolved in additional DMAc was added to the isocyanate-terminated polyether prepolymer solution and the resulting reaction formed the desired segmented polyurethane/urea. The additional amount of DMAc decreased the solids concentration of the resultant solution to 20% by weight of the total solution.

Films were cast onto glass plates from the polymer solution. The films were dried and cut with a die into 0.25" wide strips. Elastic properties of spandex films were measured in general accord with the procedures described in ASTM D 2731-72. This method was designed mainly for the testing of elastic threads and yarns rather than films. However, the parameters tested by this method are those commonly used to evaluate the elastic properties of spandex. Tests were run on a constant-rate-of-extension type tensile testing machine with a load capacity of 50 N (11.2 1b). The samples were gripped by pneumatically operated clamps. In order to avoid tearing at the grips, films were sandwiched between two pieces of self-fusing Okonite No. 35 Jacketing Tape.

For the examples, sample strips of 0.25 inch width and 2.5 inch gauge length were cycled five times between the limits of 0 to 300% elongation. On the fifth cycle, the specimen was held in the extended state for 30 seconds before returning the crosshead. On the return cycle after holding at 300% elongation for 30 seconds, the crosshead was returned and the forces at 300, 200 and 100% elongation were recorded. By dividing the force at each of these points by the initial film cross-sectional area, the unload power or retractive power was calculated for each of these points. In order to calculate % set, 30 seconds after completion of the fifth cycle, the crosshead was slowly lowered until visible slack was just removed from the film. The extension was recorded to the nearest 0.01". Set, as calculated from the following formula, is defined as the difference between the original and final length, expressed as a percentage of the original length.

$$\text{Set, in percent} = [(\text{Final Length} - \text{Initial Length})/\text{Initial Length}] \times 100$$

Fiber or film made from spandex polymer according to the invention generally has a set of no greater than 30%

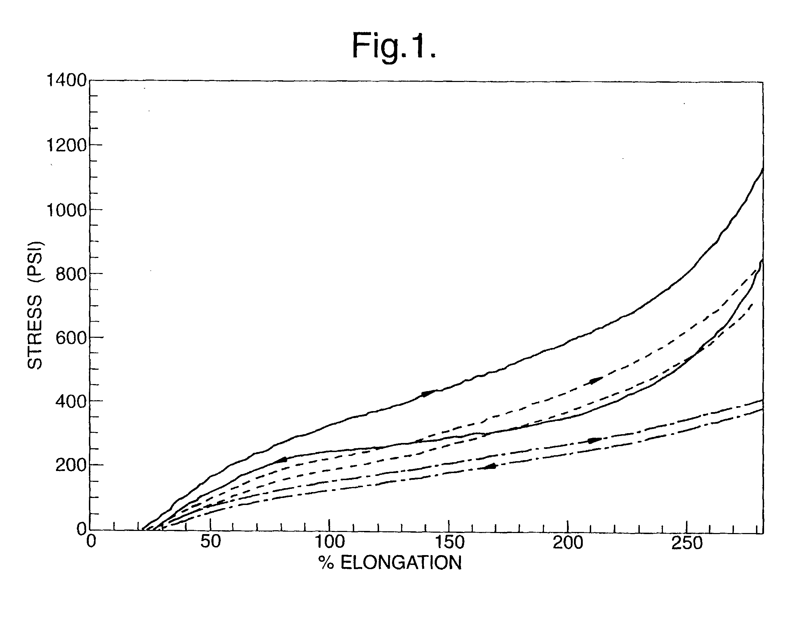

The hysteresis of some films was also determined. Hysteresis is a measure of the energy loss during stretching and retraction of an elastic material. When a film or fiber is extended on the testing machine and the direction of crosshead travel is reversed to record the retraction, the unload curve falls below the load curve as shown in Figure 1. The difference in stress-strain properties between the stretching and retraction portions of a given test cycle forms a hysteresis loop. The area bounded by the load and unload curves can be used to quantify the degree of hysteresis in a film, fiber, yarn or fabric. A larger hysteresis loop or energy loss implies heat generation and thus discomfort in wear.

Examples 1 to 6 of the following Examples relate to the first aspect of the invention.

### *Spandex With Improved Properties Obtained From 4000 Molecular Weight Ultra-Low Unsaturation Polyol / TPG Blends:*

### *Example 1 and Comparative Examples C1-C3*

The table and Figure 1 compare spandex based on a 2000 Da blend of a 4000 Da molecular weight, ultra-low unsaturation polyoxypropylene polyol blended with tripropylene glycol (TPG), prepared according to the invention (Example 1), to a spandex based on a 2000 molecular weight polytetramethylene ether glycol (PTMEG-2000) which is considered the "standard of the industry" (Comparative Example C1) and spandex based on ultra-low unsaturation polyoxypropylene glycols without TPG (Comparative Examples C2 and C3).

## TABLE 1

| Example | Polyol(s) | Low MW Species | Effective Polyol MW | Unsaturation Content of Polyol Blend (meq/gm) | NCO/-OH | % NCO | UP @ 100% MPa (psi) | UP @ 200% MPa (psi) | % Set | Area |
|---|---|---|---|---|---|---|---|---|---|---|
| C1 | PTMEG-2000 | --- | 2000 | 0 | 1.7 | 2.30 | 1.62 (235) | 2.32 (336) | 20 | 47100 |
| 1 | 4000 | TPG | 2000 | 0.005 | 1.7 | 2.29 | 1.20 (174) | 2.45 (356) | 18 | 15220 |
| C2 | 2000 | --- | 2000 | 0.005 | 1.7 | 2.32 | 0.85 (124) | 2.17 (314) | 37 | 17470 |
| C3 | 4000 | --- | 4000 | 0.005 | 1.7 | 1.22 | 0.80 (116) | 1.56 (226) | 20 | 7730 |

%NCO: NCO content (wt.%) of the prepolymer.
UP @ 100%: 5th cycle unload (retractive) power at 100% elongation.
UP @ 200%: 5th cycle unload (retractive) power at 200% elongation.
Area = Area between the load and unload curves (psi*%) - Indicates amount of hysteresis.
TPG - Tripropylene Glycol.

EP 0 931 102 B1

Table 1 shows that Comparative Example C3 spandex based on ultra-low unsaturation polyoxypropylene glycol having a molecular weight of 4000 Da without addition of low molecular weight TPG, gave dramatically improved hysteresis and similar percent set values to those of spandex prepared using PTMEG-2000 (Comparative Example C1). In addition, C3 exhibited elongations at break of greater than 1300%. Thus, in spandex-type elastomers, the behavior of ultra-low unsaturation polyoxypropylene glycols is dramatically different from the behavior of low unsaturation polyoxypropylene glycols as disclosed by Smith and Chen, who disclosed virtually no difference between spandex prepared from PTMEG and spandex prepared from low unsaturation polyoxypropylene glycols (unsaturation $\simeq$ 0.015 meq/g). However, the retractive properties of C3 could benefit from improvement. Switching to a 2000 Da molecular weight ultra-low unsaturation polyoxypropylene glycol without TPG at the same NCO/OH ratio (Comparative Example C2) resulted in slightly improved retractive properties, however at the expense of percent set value.

Spandex of Example 1, made using a 4000 Da molecular weight ultra-low unsaturation polyoxypropylene glycol blended with TPG to obtain a polyol number average weight of 2000 Da, gave dramatically improved retractive properties over Comparative Examples C2 and C3 and yielded percent set values comparable to Comparative Example C1 which was based on PTMEG, the industry standard. In addition, the spandex of Example 1 also exhibits approximately three times less hysteresis than Comparative Example Ci, based on PTMEG. A higher hysteresis or energy loss value implies heat generation and thus discomfort in wear. Example 1 spandex also exhibited an elongation at break of 1040%, while values of 450-600% are usually reported for PTMEG-based spandex.

The hysteresis may be visualized with reference to Figure 1, which illustrates the stress-strain curves after the fifth stretching cycle of the elastomers of Example 1 and Comparative Examples C1 and C3. the solid line represents a portion of the hysteresis loop of the spandex elastomer of Comparative Example C1, the industry standard PTMEG-derived spandex. The dashed curve illustrates the hysteresis of Example 1, while the dashed and dotted curve (lowest of the curves) represents the hysteresis of Comparative Example C3, containing no low molecular weight diol. Although the hysteresis of Comparative Example C3 is low, the elastomer has low retractive power.

### Spandex With Improved Properties: Effect of Unsaturation Content:
### Example 1 and Comparative Example C4

A spandex film was prepared and tested as previously disclosed from a conventional polyoxypropylene glycol of 4000 Da molecular weight, having a typical (high) unsaturation of 0.062 meq/g (Comparative Example C4) blended with TPG to obtain a polyol number average molecular weight of 2000 Da. The ultra-low unsaturation of the spandex of Example 1 is low enough that the resulting spandex has excellent properties, whereas, the high level of unsaturation in Comparative Example C4 resulted in spandex with inferior properties, in particular, an unacceptably low unload power, as well as a higher than desired percent set.

EP 0 931 102 B1

## TABLE 2

| Example | Polyol(s) | Low MW Species | Effective Polyol MW | Unsaturation Content of Polyol Blend (meq/gm) | NCO/-OH | % NCO | UP @ 100% MPa (psi) | UP @ 200% MPa (psi) | % Set |
|---|---|---|---|---|---|---|---|---|---|
| 1 | 4000 | TPG | 2000 | 0.005 | 1.7 | 2.29 | 1.20 (174) | 2.45 (356) | 18 |
| C4 | 4000 | TPG | 2000 | 0.062 | 1.7 | 2.20 | 0.70 (102) | 1.68 (243) | 29 |

***Comparison at Equal NCO/OH Ratios: Spandex With Improved
Properties Obtained From 4000 MW Ultra-Low Unsaturation
Polyoxypropylene Glycol/TPG Blends:***

***Examples 1-3 and Comparative Example C3***

Examples 1, 2 and 3 prepared according to the invention are based on a 4000 Da molecular weight ultra-low unsaturation polyoxypropylene glycol to which enough TPG has been added to lower the polyol molecular weight to 2000 Da, 1750 Da and 1500 Da, respectively. These samples show increasingly improved retractive properties over those of a spandex based solely on 4000 Da molecular weight ultra-low unsaturation polyol, such as Comparative Example 3, while also possessing a low percent set.

**TABLE 3**

| Example | Polyol(s) | Low MW Species | Effective Polyol MW | Unsaturation Content of Polyol Blend (meq/gm) | NCO/-OH | % NCO | UP @ 100% MPa (psi) | UP @ 200% MPa (psi) | % Set |
|---|---|---|---|---|---|---|---|---|---|
| C-3 | 4000 | --- | 4000 | 0.005 | 1.7 | 1.22 | 0.80 (116) | 1.56 (226) | 20 |
| 1 | 4000 | TPG | 2000 | 0.005 | 1.7 | 2.29 | 1.20 (174) | 2.45 (356) | 18 |
| 2 | 4000 | TPG | 1750 | 0.005 | 1.75 | 2.71 | 1.26 (183) | 2.69 (390) | 22 |
| 3 | 4000 | TPG | 1500 | 0.005 | 1.7 | 2.96 | 1.39 (201) | 2.96 (429) | 20 |

*Comparison at Equal % NCO: Spandex With Improved*
*Properties Obtained From Polyol / TPG Blends:*

*Examples 2 and 4*

Spandex Example 2, based on a 4000 Da molecular weight ultra-low unsaturation polyoxypropylene glycol to which enough TPG has been added to lower the molecular weight to 1750 Da, and Spandex Example 4, based on a 80/20 wt% blend of 4000 Da and 8000 Da molecular weight ultra-low unsaturation polyoxypropylene glycols to which enough TPG has been added to lower the molecular weight to 1800, both exhibit excellent unload, or retractive power, and low percent set.

## TABLE 4

| Example | Polyol(s) | Low MW Species | Effective Polyol MW | Unsaturation Content of Polyol Blend (meq/gm) | NCO/- OH | % NCO | UP @ 100% MPa (psi) | UP @ 200% MPa (psi) | % Set |
|---------|-----------|----------------|--------------------|-----------------------------------------------|----------|-------|--------------------|--------------------|-------|
| 4 | 8000/4000 | TPG | 1800 | 0.005 | 1.75 | 2.72 | 1.31 (190) | 2.65 (385) | 18 |
| 2 | 4000 | TPG | 1750 | 0.005 | 1.75 | 2.71 | 1.26 (183) | 2.69 (390) | 22 |

**Spandex With Improved Properties Obtained**
**From Polyol / 1,4-Butanediol Blends**

**Example 5, Comparative Example C5**

Spandex of Example 5, based on a 4000 Da molecular weight ultra-low unsaturation polyoxypropylene glycol to which enough BDO has been added to lower the molecular weight to 3000, shows improved elastic properties (retractive power and set) over spandex from Comparative Example C5, which is based solely on a 3000 Da molecular weight ultra-low unsaturation polyoxypropylene glycol containing 10% random internal oxyethylene.

## TABLE 5

| Example | Polyol(s) | Low MW Species | Effective Polyol MW | Unsaturation Content of Polyol Blend (meq/gm) | NCO/-OH | % NCO | UP @ 100% MPa (psi) | UP @ 200% MPa (psi) | % Set |
|---------|-----------|----------------|---------------------|-----------------------------------------------|---------|-------|---------------------|---------------------|-------|
| 5 | 4000 | BDO[1] | 3000 | 0.005 | 1.95 | 2.17 | 1.05 (153) | 2.29 (332) | 22 |
| C5 | 3000[2] | --- | 3000 | 0.005 | 2.01 | 2.19 | 0.97 (140) | 2.07 (300) | 26 |

[1]  1,4-Butanediol
[2]  3000 Da molecular weight ultra-low unsaturation diol containing 10% random internal oxyethylene moieties

EP 0 931 102 B1

**Spandex With Improved Properties Obtained From Polyol / Polyoxypropylene Glycol-425 Blends**

**Example 6 and Comparative Example C2**

Spandex of Comparative Example C2, which is based solely on a 2000 Da molecular weight ultra-low unsaturation polyoxypropylene glycol, shows a percent set which is unacceptable. By contrast, spandex of Example 6, based on a 4000 Da molecular weight ultra-low unsaturation polyoxypropylene glycol containing 10% random internal oxyethylene to which enough polyoxypropylene glycol-425 has been added to lower the molecular weight to 2000 Da, shows a set of only 20%. In addition, the spandex of Example 6 also shows improved retractive power at 100% elongation.

## TABLE 6

| Example | Polyol(s) | Low MW Species | Effective Polyol MW | Unsaturation Content of Polyol Blend (meq/gm) | NCO/-OH | % NCO | UP @ 100% MPa (psi) | UP @ 200% MPa (psi) | % Set |
|---------|-----------|----------------|---------------------|-----------------------------------------------|---------|-------|---------------------|---------------------|-------|
| 6 | 4000[1] | PPG-425[2] | 2000 | 0.005 | 1.69 | 2.14 | 1.05 (153) | 2.15 (312) | 20 |
| C2 | 2000 | --- | 2000 | 0.005 | 1.7 | 2.32 | 0.85 (124) | 2.17 (314) | 37 |

[1] Polyol contains 10% random internal oxyethylene moieties
[2] ARCOL® PPG-425, a 425 molecular weight polyoxypropylene glycol

**Lower Prepolymer and Polymer Solution Viscosities Using Ultra-Low Unsaturation Polyol/Low Molecular Weight Diol Blends**

In addition to advantages in the polymer properties highlighted above, there are also surprising processing advantages with both the isocyanate prepolymer and the polymer solutions of the subject invention. Table 7 highlights the advantage in prepolymer viscosities of two examples prepared according to the invention versus a comparative prepared with PTMEG at equivalent NCO/OH ratio. Surprisingly, the prepolymers prepared according to the invention are about eight times lower in viscosity than those based on PTMEG-2000. Lower viscosity greatly enhances the ease of prepolymer production and in processing the prepolymer into the polymer solution prior to fiber manufacture.

## TABLE 7

| Example | Polyol(s) | Low MW Species | Effective Polyol MW | Unsaturation Content of Polyol Blend (meq/gm) | NCO/OH | % NCO | Prepolymer Viscosity (cps @ 60°C) | Prepolymer Viscosity (cps @ 80°C) |
|---|---|---|---|---|---|---|---|---|
| C1 | PTMEG-2000 | --- | 2000 | 0 | 1.7 | 2.30 | 54,300 | 21,400 |
| 3 | 4000 | TPG | 1500 | 0.005 | 1.7 | 2.96 | 8,000 | 2,700 |
| 4 | 8000/4000 | TPG | 1800 | 0.005 | 1.75 | 2.72 | 6,700 | 2,600 |

EP 0 931 102 B1

Another advantage is the viscosity of the polymer solutions. Table 8 compares the viscosity of polymer solutions (20% solids in DMAC) prepared according to the invention versus a comparative example based on PTMEG. The polymer solutions prepared according to the invention have dramatically lower viscosities than those based on PTMEG-2000. Polymer solution viscosity is normally a direct function of the weight average molecular weight, however, the weight average molecular weights of polymer solution Examples 3 and 4 are even higher than Comparative C-1 based on PTMEG-2000. This unexpected development will allow one to produce polymer solutions at a higher solids content which translates to higher throughput during the fiber spinning step. The removal of solvent (DMAC) is the rate limiting step in terms of the speed of fiber production. Higher polymer solids content means a lower solvent content which in turn means less solvent to remove during fiber spinning and a faster rate of production. Polymer solution viscosity, as measured at 20 weight percent solids in DMAC at 25°C, is preferably less than about 20,000 cps, more preferably less than about 15,000 cps.

## TABLE 8

| Example | Polyol(s) | Low MW Species | Effective Polyol MW | Unsaturation Content of Polyol Blend (meq/gm) | NCO/OH | % NCO | Polymer Solution Viscosity (cps @ 25°C) | Polymer Weight Average MW[*] |
|---------|-----------|----------------|---------------------|-----------------------------------------------|--------|-------|------------------------------------------|------------------------------|
| C1 | PTMEG-2000 | · --- | 2000 | 0 | 1.7 | 2.30 | 30,000 | 362,000 |
| 3 | 4000 | TPG | 1500 | 0.005 | 1.7 | 2.96 | 5,700 | 409,000 |
| 4 | 8000/4000 | TPG | 1800 | 0.005 | 1.75 | 2.72 | 8,800 | 418,000 |

[*] The polymer weight average molecular weights were determined by gel permeation chromatography (GPC) using a Waters GPC equipped with a Waters Model 510 HPLC Pump and a Waters 410 Differential Refractomer. The samples were analyzed versus polymethylmethacrylate (PMMA) standards on a Styrogel® column using N,N-dimethylformamide at 50°C.

The spandex polymer solutions useful for extruding as a sheet into a film or as a fiber from a spinerette or other equivalent forms (i.e. hollow fibers, tubes, strips, etc.) generally have a limiting maximum viscosity beyond which the extrusion or spinning process is ineffective. This maximum effective processing viscosity may vary somewhat with the particular equipment utilized, however, its value is readily determined by one skilled in the art by the simple expedient of increasing spandex polymer solution solids content, and hence solution viscosity, to the point where the extrusion or spinning operation cannot be performed or maintained. Such tests are routinely done by those skilled in the art of wet solution spinning and dry solution spinning, for example.

An unexpected benefit provided by the spandex polymers of the first aspect of the invention is their very low solution viscosities as compared to otherwise similar polymers prepared from 2000 Da PTMEG alone or 2000 Da PTMEG mixed with a low molecular weight diol substituted for the ultra-low unsaturated high molecular weight polyoxypropylene glycol/low molecular weight diol blend of the subject invention. The subject invention polymer solution viscosities, as measured at 20% solids in DMAC at 25°C, should be less than that of the PTMEG-derived elastomer by a factor of at least 2, preferably a factor of 3, and more preferably a factor of 4 or more.

As a result of the lower solution viscosity at given solids concentration, the solids content of the subject invention spandex polymer solutions can be increased substantially, raising the throughput of the film or fiber (inclusive of other forms as well) extrusion process. At the same time, the polymer molecular weights may be maintained at a high value, higher than those of otherwise similar polymers derived from 2000 Da molecular weight PTMEG at the same isocyanate to hydroxyl group ratio. The molecular weights may be as high as 400,000 Da, and can easily reach 300,000 Da.

The following Examples 7 to 10 and Comparative Examples C6 to C10 illustrate the second aspect of the invention.

**Examples 7 and 8 and Comparative Example C-6**

**Spandex With Improved Properties Obtained From PTMEG-2000/4000 MW**

**Ultra-Low Unsaturation Polyol Blends (Comparison at Equal NCO/OH Ratio)**

The table and figure below compare spandex based on 2000 Da molecular weight polytetramethylene ether glycol (PTMEG-2000) blended with a 4000 Da molecular weight ultra-low unsaturation polyoxypropylene polyol prepared according to the invention to a spandex based on a 2000 Da molecular weight polytetramethylene ether glycol (PTMEG-2000) which is considered the "standard of the industry."

### TABLE 9

#### Effect of 4000 MW Ultra-Low Monol PPG Addition to a Spandex Formulation Based on PTMEG-2000

| Example | Wt % PPG-4000 | NCO/OH | % NCO | UP @ 100% MPa (psi) | UP @ 200% MPa (psi) | % Set | Area | % Area Reduction | Prepolymer Viscosity @ 80°C (cps) |
|---|---|---|---|---|---|---|---|---|---|
| C-6 | 0 | 1.7 | 2.30 | 1.65 (240) | 2.34 (340) | 20 | 47100 | — | 21400 |
| 7 | 10 | 1.7 | 2.18 | 1.65 (240) | 2.21 (320) | 16 | 36700 | 22 | 11100 |
| 8 | 40 | 1.7 | 1.91 | 1.45 (210) | 2.41 (350) | 19 | 20600 | 56 | 8700 |

NCO: NCO content (wt.%) of the prepolymer.

UP @ 100%: 5th cycle unload (retractive) power at 100% elongation.

UP @ 200%: 5th cycle unload (retractive) power at 200% elongation.

% Set = percent residual elongation after 5th cycle to 300% elongation.

Area = Area between the load and unload curves (psi%) - Indicates the amount of hysteresis.

% Area = Indicates the percentage decrease of the hysteresis.

The results of Table 9 illustrate the surprising and unexpected improvement offered by the present invention. The addition of only 10 percent by weight (~5 equivalent percent) of a 4000 Da molecular weight, ultra-low unsaturation polyoxypropylene diol to the industry standard 2000 m.w. PTMEG resulted in a 22% decrease in hysteresis and approximately a 50% reduction in prepolymer viscosity. As polymer solution viscosity is often directly related to prepolymer viscosity in spandex elastomers, the lower viscosity reflects the opportunity to increase the solids content of the spinning solution. Solvent removal from the spun fibers is a limiting step in fiber production. The ability to prepare higher solids content spinning solutions may be used to increase fiber throughput. Note that despite the improvements in hysteresis and prepolymer viscosity, the unload power was virtually unchanged, showing only a very slight reduction at 200% elongation. The percent set was improved slightly.

Table 9 also shows that addition of 40 weight percent of the same ultra-low unsaturation diol results in a 56% improvement in hysteresis, a yet further decrease in prepolymer viscosity, with little change in unload power, the retractive power at 100% elongation being somewhat less while that at 200% elongation is slightly more.

*Example 8 and Comparative Example C-7*

*<u>Spandex Based on PTMEG-2000/PPG-4000 Blends:</u>*
*<u>Effect of Monol Content (Comparison at Equal NCO/OH Ratio)</u>*

**TABLE 10**

| Example | Wt% PPG-4000 | PPG-4000 Unsaturation (meq/g) | NCO/OH | % NCO | UP @ 100% MPa (psi) | UP @ 200% MPa (psi) | % Set | Area | Tensile Strength MPa (psi) |
|---|---|---|---|---|---|---|---|---|---|
| 8 | 40 | 0.005 | 1.7 | 1.91 | 1.45 (210) | 2.41 (350) | 19 | 20600 | 60.3 (8740) |
| C-7 | 40 | 0.078 | 1.7 | 1.82 | 1.10 (160) | 1.79 (260) | 20 | 18600 | 34.5 (5000) |

In Table 10, the effect of unsaturation of the polyoxypropylene glycol (PPG) is shown. In Example 2, the admixture of ultra-low unsaturation polyoxypropylene diol with PTMEG produced a spandex elastomer having unload power similar to that of the industry standard PTMEG as shown in Table 9 However, Comparative Example 6 spandex, prepared from an admixture of PTMEG and a conventionally catalyzed polyoxypropylene diol having an unsaturation of 0.078 meq/g produced a spandex with markedly inferior unload power and tensile strength.

*Example 9 and Comparative Examples C-6 and C-8*

<u>*Spandex Based On PTMEG-2000/PPG-2000 Blends: Effect of Blend Ratio*</u>

<u>*Spandex Based On PTMEG-2000/PPG-2000 Blends: Effect of Blend Ratio*</u>

TABLE 11

| Example | Wt% PPG-2000 | PPG-2000 Unsaturation (meq/g) | NCO/OH | % NCO | UP @ 100% MPa (psi) | UP @ 200% MPa (psi) | % Set | Area | % Area Reduction | Prepolymer Viscosity @ 80°C (cps) |
|---|---|---|---|---|---|---|---|---|---|---|
| C-6 | 0 | N/A | 1.7 | 2.30 | 1.65 (240) | 2.34 (340) | 20 | 47100 | -- | 21400 |
| 9 | 40 | 0.005 | 1.7 | 2.30 | 1.38 (200) | 2.34 (340) | 23 | 24700 | 48 | 6600 |
| C-8 | 100 | 0.005 | 1.7 | 2.32 | 0.83 (120) | 2.14 (310) | 37 | 17500 | 63 | 3000 |

In Table 11, the effects of blend ratio are presented. The addition of 40 weight percent ultra-low unsaturation 2000 Da molecular weight polyoxypropylene glycol to PTMEG prior to prepolymer formation produces a spandex with noticeably lower hysteresis and considerably lower prepolymer viscosity while substantially retaining unload power and percent set. Substitution of the same ultra-low unsaturation polyol for all the PTMEG produces a spandex with yet lower hysteresis and prepolymer viscosity. However, the unload power is considerably reduced, and the percent set unacceptable. This spandex would not be a useful commercial product.

*Example 10 and Comparative Examples C-6, C-9, and C-10*

<u>*Spandex Based PTMEG-2900/PPG Blends: Effect of PPG Molecular Weight (Comparison at Equal % NCOs)*</u>

TABLE 12

| Example | Polyol(s) | Wt% PPG | PPG Unsaturation (meq/g) | % NCO | UP @ 100% MPa (psi) | UP @ 200% MPa (psi) | % Set | Area | % Area Reduction | Tensile Strength MPa (psi) | Prepolymer Viscosity @ 80°C (cps) |
|---|---|---|---|---|---|---|---|---|---|---|---|
| C-6 | PTMEG-2000 | N/A | N/A | 2.30 | 1.65 (240) | 2.34 (340) | 20 | 47100 | -- | 75.8 (11000) | 21400 |
| 10 | PTMEG-2900/ PPG-2000 | 20 | 0.005 | 2.24 | 1.59 (230) | 2.14 (310) | 16 | 32600 | 31 | 60.0 (8700) | 10500 |
| C-9 | PTMEG-2900/ PPG-425 | 8 | 0.002 | 2.30 | 1.52 (220) | 1.93 (280) | 15 | 40900 | 13 | 70.3 (10200) | 18500 |
| C-10 | PTMEG-2900/ TPG | 3 | 0 | 2.24 | 1.52 (220) | 1.93 (280) | 13 | 44900 | 5 | 20.0 (2900) | 22600 |

Table 12 indicates the effect of the molecular weight of the ultra-low unsaturation polyoxypropylene glycol. As can be seen, a molecular weight of 2000 Da provides for a significant reduction in hysteresis, percent set, and prepolymer viscosity, with some loss of tensile strength, while substantially maintaining unload power as compared to an all PTMEG-derived spandex. Use of a 425 Da molecular weight diol resulted in substantial maintenance of tensile strength and showed approximately the same percent set, however unload power is considerably lower, and prepolymer viscosity and hysteresis changed but little. Use of tripropylene glycol (TPG; molecular weight 192 Da) together with PTMEG exhibited considerable loss of unload power and virtually the same hysteresis and prepolymer viscosity. Tensile strength, however, is completely unacceptable. These examples were done at the same % NCO so as to be comparable.

The following Examples 11 to 19 and Comparative Examples C11 to C14 illustrate the third aspect of the invention.

### *Example 11*

### *Spandex Based on Polyoxypropylene Polyols: Effect of Terminal Unsaturation Content*

Spandex polymers of Example 11 and Comparative Examples C-11 and C-12 were prepared using 4000 MW polyoxypropylene diols (PPG) with terminal unsaturation contents of 0.0047, 0.015 and 0.058 meq/gm, respectively. These polyols were reacted with 4,4'-MDI at an NCO/OH of 2.35 to form an isocyanate-terminated prepolymer. The isocyanate prepolymer was extended with ethylene diamine (EDA) in dimethylacetamide (DMAC) solution at a 20% solids content. Films were cast on glass plates and analyzed in general accord with the procedures described in ASTM D 2731-72. A detailed description of the spandex preparation and analysis procedure is given in the section above.

40

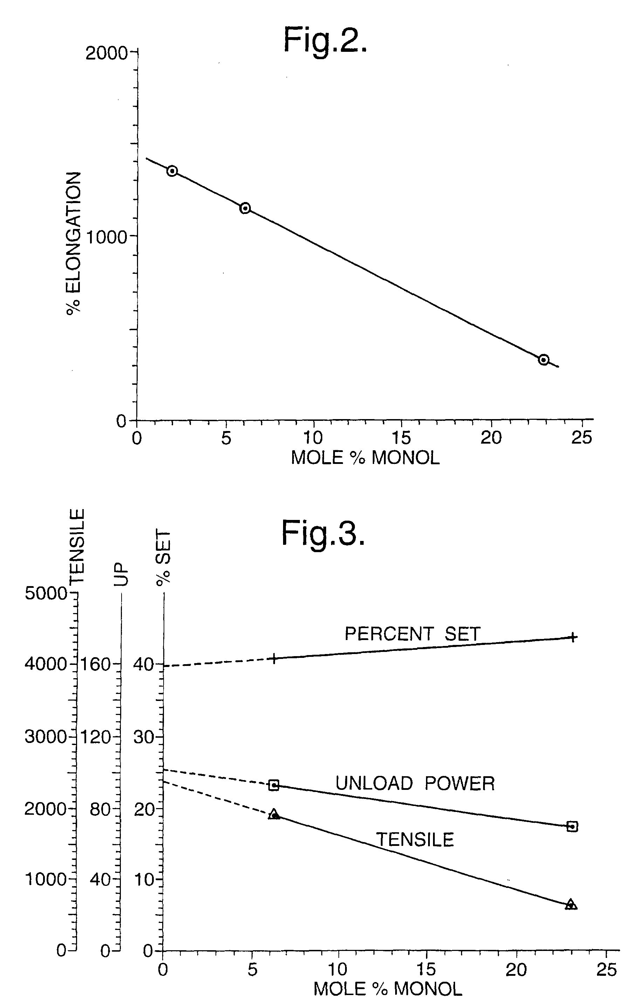

The results set forth in Table 13 are plotted in Figures 2, 3 and 4, and demonstrate conclusively the very

## TABLE 13

| Example | Polyol MW | Unsaturation Content of Polyol Blend (meq/g) | NCO/OH | % NCO | UP @ 100% MPa (psi) | UP @ 200% MPa (psi) | % Set | Tensile Strength MPa (psi) | % Elongation @ Break |
|---------|-----------|----------------------------------------------|--------|-------|---------------------|---------------------|-------|----------------------------|----------------------|
| 11 | 4000 | 0.0047 | 2.35 | 2.28 | 1.00 (145) | (2.16) 313 | 24 | 34.1 (4940) | 1350 |
| C-11 | 4000 | 0.015 | 2.35 | 2.51 | 0.63 (92) | (1.78) 258 | 40 | 13.6 (1970) | 1170 |
| C-12 | 4000 | 0.058 | 2.35 | 2.22 | 0.47 (68) | (1.36) 197 | 43 | 4.4 (640) | 310 |

NCO:  NCO content (wt.%) of the prepolymer.
UP @ 100%:  5th cycle unload (retractive) power at 100% elongation.
UP @ 200%:  5th cycle unload (retractive) power at 200% elongation.

different behavior of ultra-low unsaturation content polyoxypropylene diol-derived spandex as compared to spandex prepared from conventional diols and low unsaturation diols. In the Figures, tensile strength (TENSILE) and unload power (UP) are both reported in MPa and psi. Figure 2 illustrates the relationship between elongation and monol content. The 0.058 meq/g conventional diol contains about 23 mol percent monol, while the low unsaturation diol (0.015 meq/g unsaturation) has only about 6% monol, and demonstrates considerably greater elongation. The ultra-low unsaturation diol results in only a slight further improvement, in elongation, 1350%, at the limit of crosshead travel. As can be seen from Figure 2, the relationship between elongation and unsaturation appears to be inverse and linear.

Figure 3 contains plots of tensile strength, unload power, and percent set against monol content. While high tensile strength and unload power are desirable, from a commercial standpoint, a low percent set is also critical. The low unsaturation diol gave only very modest improvements in any of these physical properties as compared to the conventional diol. Extrapolating in linear fashion to lower levels of unsaturation, as shown by the dotted lines, only minimal improvement should be expected from ultra-low unsaturated diols.

However, as indicated by Figure 4, the subject invention spandex elastomers prepared from ultra-low unsaturation diols provided highly unexpected, totally non-linear behavior as compared to even low unsaturation diols. For example, while unload power increased by 50%, tensile strength more than doubled, increasing from 13.6MPa (1970 psi) to 34.1 MPa (4940 psi). Especially noteworthy is the reduction in percent set from 40 (very unacceptable) to 24, a commercially acceptable value. These effects could not be predicted based on the behavior of low unsaturation diols.

**Examples 12 to 14**

**Spandex Based on Polyoxypropylene Polyols: Effect of PPG Molecular Weight**

Table 14 shows the effect of the ultra-low unsaturation polyol molecular weight on the spandex properties. Surprisingly, it has been found that a polyol molecular weight of greater than 2000 Da (Comparative C-13) is required to achieve a percent set of 30 or less. This is particularly surprising considering the fact that the spandex industry currently uses PTMEG in a molecular weight range of 1500 to 2000 Da.

**TABLE 14**

| Example | Polyol* MW | Unsaturation Content of Polyol (meq/gm) | NCO/OH | % NCO | UP @ 100% MPa (psi) | UP @ 200% MPa (psi) | % Set |
|---|---|---|---|---|---|---|---|
| C-13 | 2000 | 0.0047 | 1.7 | 2.32 | 0.85 (124) | 2.17 (314) | 37 |
| 12 | 3000 | 0.005 | 1.7 | 1.62 | 0.82 (119) | 1.75 (254) | 26 |
| 13 | 4000 | 0.005 | 1.7 | 1.22 | 0.80 (116) | 1.56 (226) | 20 |
| 14 | 8000 | 0.005 | 1.7 | 0.75 | 0.50 (72) | 0.93 (135) | 18 |

*2000, 4000 and 8000 MW polyols are polyoxypropylene diols, and the 3000 MW polyol is a polyoxyethylene-oxypropylene copolymer diol which contains 10 weight percent of random internal oxyethylene moieties.

**Example 15**

**Spandex Based On Polyoxypropylene Polyols: Comparison to Polytetramethylene Ether Glycol (PTMEG)**

Table 15 and Figure 5 compare spandex based on ultra-low unsaturation polyoxypropylene polyols according to the invention to a spandex based on a 2000 Da molecular weight polytetramethylene ether glycol (PTMEG-2000) which is considered the "standard of the industry."

Spandex made according to the invention using a 4000 Da molecular weight ultra-low unsaturation polyoxypropylene diol has dramatically higher elongation than the comparative spandex based on PTMEG-2000 (C-14). Example 15 has an elongation at break of 1350%, while values of 450-600% are usually reported for PTMEG-based spandex. A higher elongation at break dramatically increases the energy required to break the fiber. Breakage of the spandex during either the fiber and textile manufacturing process causes major problems in terms of fiber productivity and textile production. So a fiber with a higher energy to break would be considered advantageous by the spandex manufacturers and the textile industry.

Spandex based on ultra-low unsaturation polyoxypropylene glycol also gave dramatically lower hysteresis over that based on PTMEG-2000. Hysteresis is a measure of the energy loss during stretching and retraction of an elastic material. When a film or fiber is extended on the testing machine and the direction of crosshead travel is reversed to record the retraction, the unload curve falls below the load curve as shown in Figure 5 at 1. The difference in stress-strain properties between the stretching and retraction portions of a given test cycle forms a hysteresis loop. The area 2 bounded by the load 3 and unload curves 1 can be used to quantify the degree of hysteresis in a film, fiber, yarn or fabric. A larger hysteresis loop or energy loss implies heat generation and thus discomfort in wear.

Example 15 prepared according to the invention exhibited approximately three times less hysteresis than Comparative C-14. The % set values of Example 15 are comparable to C-14. The hysteresis is plotted in Figure 5 at 4.

Spandex based on ultra-low unsaturation polyoxypropylene glycol has the advantages of the high elongation and lower hysteresis of rubber with the advantages of the ease of processability to fine denier fibers of PTMEG-based spandex.

**TABLE 15**

| Example | Polyol | Polyol MW | Unsaturation Content of Polyol (meq/gm) | NCO/OH | % NCO | UP @ 100% MPa (psi) | UP @ 200% MPa (psi) | % Set | Area |
|---|---|---|---|---|---|---|---|---|---|
| C-14 | PTMEG 2000 | 2000 | 0 | 1.7 | 2.30 | 1.62 (235) | 2.32 (336) | 20 | 47100 |
| 15 | 4000 | 4000 | 0.005 | 2.35 | 2.28 | 1.00 (145) | 2.16 (313) | 24 | 13500 |

Area = Area between the load and unload curves (psi*%) - indicates the amount of hysteresis.

*Example 16 and 17*

**Spandex Based on Polyoxypropylene Polyol Using Isocyanate Mixtures**

Table 16 below shows two spandex formulations prepared according to the invention utilizing a mixture of diisocyanates instead of only 4,4'-diisocyanatodiphenylmethane (4,4'-MDI). Example 16 contains 20 equivalent percent of isophorone diisocyanate (IPDI) and Example 17 contains 20 equivalent percent of 2,4'-diiso-cyanato-diphenylmethane (2,4'-MDI). Example 16 was prepared at a 30% solids content instead of a 20% solids content. The film properties are excellent as indicated by the low percent set and high elongation at break values.

## TABLE 16

| Example | PPG Polyol MW* | Isocyanate | NCO/OH | % NCO | UP @ 100% (psi) | UP @ 300% (psi) | % Set | Tensile Strength MPa (psi) | % Elongation at Break |
|---|---|---|---|---|---|---|---|---|---|
| 16 | 4000 | 80% 4,4'-MDI 20% IPDI** | 2.35 | 2.35 | 0.82 (119) | 2.68 (389) | 14 | >30 (>4400***) | >1350*** |
| 17 | 4000 | 80% 4,4'-MDI 20% 2,4'-MDI | 2.35 | 2.38 | 0.83 (121) | 3.53 (512) | 18 | >14 (>2000***) | >1350*** |

4000 = 4000 mw polyoxypropylene diol (unsaturation content = 0.005 meq/gm).
** IPDI = isophorone diisocyanate.
*** Did not break at limit of crosshead travel.

*Example 18*

*Spandex Based on Polyoxypropylene Polyol Using Amine Extender Mixtures*

Table 17 presents physical properties of a spandex formulation prepared according to the invention utilizing a mixture of diamines instead of only ethylene diamine (EDA). Example 18 contains 20 percent equivalents of 1,2-propane diamine (PDA). The film properties are excellent as indicated by the low percent and high elongation at break.

**TABLE 17**

| Example | PPG Polyol MW* | Chain Extender | NCO/OH | % NCO | UP @ 100% MPa (psi) | UP @ 300% MPa (psi) | % Set | Tensile Strength MPa (psi) | % Elongation at Break |
|---------|----------------|----------------|--------|-------|---------------------|---------------------|-------|----------------------------|-----------------------|
| 18 | 4000 | 80% EDA 20% PDA** | 2.35 | 2.30 | 0.83 (120) | 3.90 (566) | 24 | >32 (4700***) | >1350*** |

**   PDA = 1,2-propanediamine
***  Did not break at limit of crosshead travel

EP 0 931 102 B1

*Example 19*

*Lower Prepolymer and Polymer Solution Viscosities Using Ultra-Low Unsaturation Polyoxypropylene Polyols*

In addition to advantages in the polymer properties highlighted above, there are also surprising processing advantages with both the isocyanate prepolymer and the polymer solutions. Table 18 below highlights the advantage in prepolymer viscosities of samples prepared according to the invention versus a comparative example prepared with PTMEG at equivalent NCO/OH ratios. Surprisingly, Example 12 had a prepolymer viscosity roughly eight times lower than the Comparative C-14 based on PTMEG-2000. Lower viscosity greatly enhances the ease of prepolymer production and in processing the prepolymer into the polymer solution prior to fiber manufacture.

Another advantage is the viscosity of the polymer solutions. The table includes a comparison of the viscosity of polymer solutions (20% solids in DMAC) prepared according to the invention versus a comparative example based on PTMEG. The polymer solutions prepared according to the invention have dramatically lower viscosities than those based on PTMEG-2000. Polymer solution viscosity is normally a direct function of the weight average molecular weight. However, the weight average molecular weights of the polymer solution of the Example 12 prepolymer is even higher than that of the Comparative C-14 prepolymer based on PTMEG-2000. This unexpected development will allow production of polymer solutions at a higher solids content which translates to higher throughput during the fiber spinning step. The removal of solvent (DMAc) is the rate limiting step in terms of the speed of fiber production. Higher polymer solids content means a lower solvent content, which in turn means less solvent to remove during fiber spinning and a faster rate of production. In addition, energy costs may be reduced as well.

## TABLE 18

| Example | Polyol(s) | Unsaturation Content of Polyol (meq/gm) | NCO/OH | %NCO | Prepolymer Viscosity (cps@60°C) | Prepolymer Viscosity (cps@80°C) | Polymer Solution Viscosity (cps@25°C) | Polymer Weight Average MW** |
|---------|-----------|------------------------------------------|--------|------|----------------------------------|----------------------------------|----------------------------------------|------------------------------|
| C-14 | PTMEG-2000 | 0 | 1.7 | 2.30 | 54,300 | 21,400 | 30,000 | 362,000 |
| 12 | 3000* | 0.005 | 1.7 | 1.62 | 6,200 | 2,600 | 14,400 | 467,000 |

A polyoxyethylene-oxypropylene copolymer diol containing 10 weight percent of random internal oxyethylene moieties
Polymer molecular weights were determined by gel permeation chromatography (GPC) using a Waters GPC equipped with a Waters Model 510 HPLC Pump and a Waters 410 Differential Refractomer. The samples were analyzed versus polymethylmethacrylate (PMMA) standards on a Styragel® column using N,N-dimethylformamide at 50°C.

**Claims**

1. A segmented polyurethane/urea elastomer obtained by reacting in solution (a) an isocyanate prepolymer obtained by reacting a stoichiometric excess of one or more di and/or polyisocyanates with a polyol component with (b) a diamine chain extender comprising at least one diamine selected from aliphatic diamines and cycloaliphatic diamines characterised in that the polyol component comprises 100 to 5 equivalent percent of a glycol component and 0 to 95 equivalent percent of one or more polytetramethylene ether glycols and the glycol component comprises at least one ultra-low unsaturation polyoxypropylene diol having a molecular weight in excess of 1500 Da and an average unsaturation of less than 0.010 meq/g, optionally in admixture with a minor amount of a low molecular weight diol having a molecular weight less than 750Da, the average molecular weight of said glycol component being from 1000 Da to 10,000 Da, with the proviso that where the glycol component does not include any of said low molecular weight diol, said glycol component has a molecular weight in excess of 2,000 Da and an unsaturation of less than 0.010 meq/g and comprises in most major part one or more ultra low unsaturation polyoxypropylene diols having an unsaturation of less than 0.010 meq/g and a molecular weight in the range 2,500 Da to 20,000 Da.

2. A process for the preparation of an aliphatic diamine and/or cycloaliphatic diamine-extended, segmented polyurethane/urea spandex elastomer, comprising contacting one or more diamine chain extenders substantially comprising one or more aliphatic diamines and/or cycloaliphatic diamines with a solution of an isocyanate-terminated prepolymer in an aprotic solvent, said isocyanate-terminated prepolymer comprising the reaction product of:

   a) a stoichiometric excess of an isocyanate component comprising one or more diisocyanates;
   b) a glycol component comprising,

   b)i) a high molecular weight glycol component comprising in major part, one or more ultra-low unsaturation polyoxypropylene glycols having a molecular weight of between 1500 Da and 20,000 Da and an unsaturation less than 0.010 meq/g, and
   b)ii) a low molecular weight diol having a molecular weight less than 750 Da, such that the average molecular weight of said glycol component is from 1000 Da to 10,000 Da,

   to form a diamine chain extended polyurethane/urea spandex elastomer polymer.

3. The process of claim 2 wherein said step of contacting comprises addition of one or more aliphatic diamines and/or cycloaliphatic diamines to said solution of said isocyanate-terminated prepolymer in aprotic solvent.

4. The process of claim 2 wherein said aliphatic diamines and/or cycloaliphatic diamines prior to said step of contacting are dissolved in a further amount of said aprotic solvent or a solvent miscible with said aprotic solvent.

5. The process of any one of claims 2 to 4 further comprising extruding said spandex elastomer polymer through a fiber forming spinnerette.

6. The process of any one of claims 2 to 5 wherein at least one of said ultra-low unsaturated polyoxypropylene diols has a molecular weight of between 2000 Da and 10,000 Da.

7. The process of any one of claims 2 to 6 wherein said aliphatic diamine(s) and/or cycloaliphatic diamine(s) comprises in major part ethylene diamine.

8. The process of any one of claims 2 to 7 wherein said polyoxypropylene glycol comprises a polyoxypropylene glycol having an unsaturation of 0.007 meq/g or less.

9. The process of any one of claims 2 to 7 wherein said polyoxypropylene glycol comprises a polyoxypropylene glycol having an unsaturation of 0.005 meq/g.

10. The process of any one of claims 2 to 9 wherein said glycol component has an average unsaturation less than 0.010 meq/g.

11. The process of any one of claims 2 to 10 wherein said low molecular weight diol has a molecular weight less than 500 Da.

12. The elastomer of any one of claims 2 to 10 wherein said low molecular weight diol has a molecular weight less than 200 Da.

13. A process as claimed in claim 2 in which the isocyanate-terminated prepolymer is the reaction product of a stoichiometric excess of an isocyanate component comprising one or more diisocyanates with a polyol blend comprising one or more high molecular weight ultra-low unsaturation polyoxypropylene glycols and one or more low molecular weight diols having a molecular weight below 750 Da, said ultra-low unsaturation polyoxypropylene glycol(s) having a molecular weight of from 2000 Da to 10,000 Da and an unsaturation of 0.007 meq/g or less, said blend having an average molecular weight of from 1500 Da to 3000 Da.

14. A segmented polyurethane/urea elastomer obtained by the process of any one of claims 2 to 13.

15. An elastomer as claimed in claim 14 wherein the isocyanate-terminated prepolymer has a free NCO group content of about 0.5 percent to about 8 percent.

16. A reaction spinning process for the production of an amine-extended, segmented polyurethane elastomer, comprising:

   a) selecting an isocyanate-terminated prepolymer having a free NCO group content of from about 0.5 percent to about 8 percent by weight, said prepolymer comprising the reaction product of:

   a stoichiometric excess of an isocyanate component comprising one or more diisocyanates; with
   a glycol component comprising a high molecular weight glycol component comprising in major part, one or more ultra-low unsaturation polyoxypropylene glycols individually having a molecular weight of between 1500 Da and 20,000 Da and an unsaturation less than 0.010 meq/g, and
   a low molecular weight diol having a molecular weight less than 750 Da, such that the average molecular weight of said glycol component is from 1000 Da to 10,000 Da;

   b) introducing said prepolymer (a) into a chain extender solution containing one or more aliphatic diamines and/or cycloaliphatic diamines dissolved in a volatile solvent;
   c) withdrawing from said chain extender solution an amine-extended, segmented polyurethane/urea elastomer; and
   d) volatilizing any residual volatile solvent container in said amine-extended, segmented polyurethane elastomer.

17. A process for increasing the throughput in the preparation of films or fibers of segmented polyurethane/urea spandex elastomers by extrusion of a segmented polyurethane/urea spandex polymer dissolved in a polar aprotic solvent, said solution having a maximum effective processing viscosity, said process comprising selecting as said segmented polyurethane/urea spandex polymer a spandex polymer of claim 2, wherein said spandex polymer solution has a solution viscosity substantially less than an otherwise similar PTMEG-derived segmented polyurethane/urea polymer solution of the same solids content, such that the solids content of said spandex polymer solution is increased to a solids content higher than the maximum solids content of said PTMEG-derived segmented polyurethane/urea which provides a solution viscosity less than or equal to said maximum effective processing viscosity.

18. The process of claim 17 wherein said spandex polymer solution viscosity determined at 20 weight percent polymer solids in dimethylacetamide at 25°C is less than 20,000 cps.

19. The process of claim 17 wherein said spandex polymer solution viscosity determined at 20 weight percent polymer solids in dimethylacetamide at 25°C is less than 15,000 cps.

20. The process of any one of claims 17 to 19 wherein said polymer has a weight average molecular weight of 300,000 Da or more.

21. A process for the preparation of a segmented polyurethane/urea spandex elastomer, comprising reacting in solution in a solvent:

   a) an isocyanate-terminated prepolymer prepared by reacting a stoichiometric excess of one or more di- or polyisocyanates, so as to provide a free NCO group content of said prepolymer of from about 0.5% by weight to about 10% by weight based on prepolymer weight, with a polyol component comprising in most major part a diol component, said diol component comprising from 5 equivalent percent to 50 equivalent percent of one or more ultra-low unsaturation polyoxypropylene diols having a molecular weight in excess of 1500 Da and an average unsaturation of less than 0.010 meq/g, and from 95 equivalent percent to about 50 equivalent percent of one or more polytetramethylene ether glycols having a molecular weight of from 600 Da to 6000 Da; with

b) a diamine chain extender comprising one or more aliphatic diamines, cycloaliphatic diamines, or mixtures thereof to form an aliphatic diamine and/or cycloaliphatic diamine chain extended spandex elastomer reaction product; and

c) removing said solvent from said reaction product.

22. The process of claim 21 wherein said isocyanate terminated prepolymer (a) is reacted with said chain extender (b) in a polar aprotic solvent followed by volatilization of said aprotic solvent.

23. The process of claim 21 or claim 22 wherein said ultra-low unsaturation polyoxypropylene diol comprises from about 5 to about 35 equivalent percent of said diol component.

24. The process of any one of claims 21 to 23 wherein said ultra-low unsaturation diol has an average molecular weight of from about 2000 Da to about 8000 Da.

25. The process of any one of claims 21 to 24 wherein said polyol component further comprises one or more monomeric polyol(s) having a functionality of 3 or more, an oxyalkylated oligomer thereof, or a mixture of monomeric polyol(s) and oxyalkylated oligomer(s), said oxyalkylated oligomers having average molecular weights less than 500 Da.

26. The process of any one of claims 21 to 25 wherein said NCO group content is from 1.5 weight percent to 4 weight percent.

27. The process of any one of claims 21 to 26 wherein said isocyanate-terminated prepolymer (a) is reacted with said chain extender (b) by introducing said prepolymer into a solution of chain extender.

28. The process of claim 27 wherein said solution of chain extender contains a volatile solvent.

29. The process of claim 28 wherein said volatile solvent is selected from the group consisting of water and toluene.

30. A segmented polyurethane/polyurea spandex polymer obtained by the process of any one of claims 21 to 29.

31. A process for the reduction of PTMEG contained in the soft segments of segmented, polyurethane/urea spandex polymers without substantial loss of unload power or percent set, or for the reduction of viscosity of isocyanate-terminated PTMEG prepolymers prepared by reacting a stoichiometric excess of one or more di- or polyisocyanates with PTMEG, said process comprising substituting for from 5 equivalent percent to 50 equivalent percent of PTMEG one or more ultra-low unsaturation polyoxypropylene polyols having molecular weights from 1500 Da to 20,000 Da and an average unsaturation less than 0.010 meq/g.

32. A process for the preparation of a segmented polyurethane/urea spandex-type elastomer, comprising:
       preparing a solution in an aprotic solvent of

(a) an isocyanate-terminated prepolymer prepared by reacting a stoichiometric excess of one or more di-and/or polyisocyanates with a polyoxypropylene diol component having a molecular weight in excess of 2000 Da and an unsaturation of 0.010 meq/g or less, said polyoxypropylene diol component comprising in most major part, one or more ultra-low unsaturation polyoxypropylene diols having an unsaturation of less than 0.010 meq/g, and a molecular weight of about 2500 Da to about 20,000 Da, said isocyanate-terminated prepolymer having an isocyanate group content of from about 0.5 weight percent to about 10 weight percent; and

b) chain extending said isocyanate-terminated prepolymer with a aliphatic and/or cycloaliphatic diamine component to form a segmented polyurethane/urea elastomer.

33. The process of claim 32 wherein said ultra-low unsaturation polyoxypropylene diol has an unsaturation of less than 0.007 meq/g.

34. The process of claim 32 or claim 33 wherein said one or more ultra-low unsaturation polyoxypropylene diol(s) has/ have a number average molecular weight of from 3000 Da to 8000 Da.

35. The process of claim 32 or claim 33 wherein said one or more ultra-low unsaturation polyoxypropylene diol(s) has/ have a number average molecular weight of from 4000 Da to 8000 Da.

36. The process of any one of claims 32 to 35 wherein said aliphatic diamine comprises ethylene diamine.

37. The process of any one of claims 32 to 35 wherein said aliphatic and/or cycloaliphatic diamine comprises a mixture of ethylene diamine and at least a further aliphatic diamine and/or cycloaliphatic diamine.

38. The process of any one of claims 31 to 36 wherein said one or more di- or polyisocyanates comprise methylene diphenylene diisocyanate and isophorone diisocyanate.

39. The process of any one of claims 32 to 38 wherein said polyoxypropylene diol component has an unsaturation of less than 0.010 meq/g.

40. The process of any one of claims 32 to 39 wherein said isocyanate-terminated prepolymer has an isocyanate group content of from about 2 to about 4 weight percent.

41. A modification of the process claimed in any one of claims 32 to 39 which comprises spinning said isocyanate-terminated prepolymer (a) into a chain extender solution (b) containing one or more aliphatic diamine and/or cycloaliphatic diamine chain extender(s) dissolved in a volatile solvent; to form a chain extended spandex elastomer; and

    c) withdrawing said chain extended elastomer from said solution b).

42. The process of any one of claims 32 to 41 further comprising extruding said segmented polyurethane/urea elastomer to form a spandex fiber by a process selected from the group consisting of solution dry spinning, and solution wet spinning.

43. A spandex elastomer obtained by a process as claimed in any one of claims 32 to 42.

44. The elastomer of claim 42 having a percent set of less than about 30 percent.

45. The elastomer of claim 42 or 43 having a tensile strength greater than 20.7 MPa (3000 psi).

46. The elastomer of claims 43, 44 or 45 having an elongation of greater than 900%.

**Patentansprüche**

1. Aus Segmenten bestehendes Polyurethan/Harnstoff-Elastomer, das durch Umsetzung in Lösung (a) eines Isocyanat-Prepolymers, das durch Umsetzung eines stöchiometrischen Überschusses eines oder mehrerer Di- und/ oder Polyisocyanate mit einer Polyol-Komponente erhalten wird, mit (b) einem Diamin-Kettenverlängerer erhalten wird, der wenigstens ein Diamin umfasst, das aus aliphatischen Diaminen und cycloaliphatischen Diaminen ausgewählt ist, dadurch gekennzeichnet, dass die Polyol-Komponente 100 bis 5 Äquivalent% einer Glycol-Komponente und 0 bis 95 Äquivalent-% eines oder mehrerer Polytetramethylenetherglycole umfasst, und die Glycol-Komponente wenigstens ein Polyoxypropylendiol mit äußerst geringer Nichtsättigung umfasst, das eine Molmasse von mehr als 1500 Da und eine durchschnittliche Nichtsättigung von weniger als 0,010 Milliäquivalente/g hat, gegebenenfalls in Mischung mit einer kleinen Menge eines niedermolekularen Diols mit einer Molmasse von weniger als 750 Da, wobei die durchschnittliche Molmasse der Glycol-Komponente 1000 Da bis 10 000 Da beträgt, mit der Maßgabe, dass, wenn die Glycol-Komponente keines der niedermolekularen Diole einschließt, die Glycol-Komponente eine Molmasse von größer als 2000 Da und eine Nichtsättigung von weniger als 0,010 Milliäquivalenten/g aufweist und größtenteils ein oder mehrere Polyoxypropylendiole mit einer äußerst geringen Nichtsättigung von weniger als 0,010 Milliäquivalenten/g und einer Molmasse im Bereich von 2500 Da bis 20 000 Da umfasst.

2. Verfahren zur Herstellung eines mit einem aliphatischen Diamin und/oder cycloaliphatischen Diamin kettenverlängerten, aus Segmenten bestehenden Polyurethan/Harnstoff-Spandex-Elastomers, umfassend das In-Kontakt-Bringen eines oder mehrerer Diamin-Kettenverlänger, die im wesentlichen ein oder mehrere aliphatische Diamine und/oder cycloaliphatische Diamine umfassen, mit einer Lösung eines Isocyanat-terminierten Prepolymers in einem aprotischen Lösungsmittel, wobei das Isocyanat-terminierte Prepolymer das Reaktionsprodukt

a) eines stöchiometrischen Überschusses einer Isocyanat-Komponente, die ein oder mehrere Diisocyanate umfasst;

b) einer Glycol-Komponente, umfassend

b)i) eine Glycol-Komponente hoher Molmasse, die größtenteils ein oder mehrere Polyoxypropylenglycole mit äußerst geringer Nichtsättigung und einer Molmasse von 1500 Da bis 20 000 Da und einer Nichtsättigung von weniger als 0,010 Milliäquivalenten/g umfasst, und

b)ii) ein Diol mit niedriger Molmasse, das eine Molmasse von weniger als 750 Da hat, so dass die durchschnittliche Molmasse der Glycol-Komponente 1000 Da bis 10 000 Da beträgt,

umfasst,
um ein mit einem Diamin kettenverlängertes Polyurethan/Harnstoff-Spandex Elastomerpolymer zu bilden.

3. Verfahren gemäß Anspruch 2, worin der Schritt des In-Kontakt-Bringens die Zugabe eines oder mehrerer aliphatischer Diamine und/oder cycloaliphatischer Diamine zu der Lösung des Isocyanat-terminierten Prepolymers in einem aprotischen Lösungsmittel umfasst.

4. Verfahren gemäß Anspruch 2, worin die aliphatischen Diamine und/oder cycloaliphatischen Diamine vor dem Schritt des In-Kontakt-Bringens in einer weiteren Menge des aprotischen Lösungsmittels oder eines mit dem aprotischen Lösungsmittel mischbaren Lösungsmittels gelöst werden.

5. Verfahren gemäß irgendeinem der Ansprüche 2 bis 4, das weiterhin das Extrudieren des Spandex Elastomerpolymers durch eine faserbildende Spinndüse umfasst.

6. Verfahren gemäß irgendeinem der Ansprüche 2 bis 5, worin wenigstens eines der Polyoxypropylendiole mit äußerst geringer Nichtsättigung eine Molmasse zwischen 2000 Da und 10 000 Da hat.

7. Verfahren gemäß irgendeinem der Ansprüche 2 bis 6, worin das aliphatische Diamin (die aliphatischen Diamine) und/oder das cycloaliphatische Diamin (die cycloaliphatischen Diamine) zu einem großen Anteil Ethylendiamin umfasst.

8. Verfahren gemäß irgendeinem der Ansprüche 2 bis 7, worin das Polyoxypropylenglycol ein Polyoxypropylenglycol mit einer Nichtsättigung von 0,007 Milliäquivalenten/g oder weniger umfasst.

9. Verfahren gemäß irgendeinem der Ansprüche 2 bis 7, worin das Polyoxypropylenglycol ein Polyoxypropylenglycol mit einer Nichtsättigung von 0,005 Milliäquivalenten/g umfasst.

10. Verfahren gemäß irgendeinem der Ansprüche 2 bis 9, worin die Glycol-Komponente eine durchschnittliche Nichtsättigung von weniger als 0,010 Milliäquivalenten/g umfasst.

11. Verfahren gemäß irgendeinem der Ansprüche 2 bis 10, worin das niedermolekulare Diol eine Molmasse von weniger als 500 Da hat.

12. Elastomer gemäß irgendeinem der Ansprüche 2 bis 10, worin das niedermolekulare Diol eine Molmasse von weniger als 200 Da hat.

13. Verfahren gemäß Anspruch 2, worin das Isocyanat-terminierte Prepolymer das Reaktionsprodukt eines stöchiometrischen Überschusses einer Isocyanat-Komponente, die ein oder mehrere Diisocyanate umfasst, mit einer Polyol-Mischung ist, die ein oder mehrere hochmolekulare Polyoxypropylenglycole mit äußerst geringer Nichtsättigung und ein oder mehrere niedermolekulare Diole mit einer Molmasse von weniger als 750 Da, umfasst, wobei das Polyoxypropylenglycol (die Polyoxypropylenglycole) mit äußerst geringer Nichtsättigung eine Molmasse von 2000 Da bis 10 000 Da und eine Nichtsättigung von 0,007 Milliäquivalenten/g oder weniger aufweist, wobei die Mischung eine durchschnittliche Molmasse von 1500 Da bis 3000 Da aufweist.

14. Aus Segmenten bestehendes Polyurethan/Harnstoff-Elastomer, welches durch das Verfahren gemäß irgendeinem der Ansprüche 2 bis 13 erhalten wird.

15. Elastomer gemäß Anspruch 14, worin das Isocyanat-terminierte Prepolymer einen Gehalt an freien NCO-Gruppen von etwa 0,5 % bis etwa 8 % aufweist.

16. Reaktionsspinnverfahren zur Herstellung eines Amin-kettenverlängerten, aus Segmenten bestehenden Polyurethanelastomers, umfassend:

    a) das Auswählen eines Isocyanat-terminierten Prepolymers mit einem Gehalt an freien NCO-Gruppen von etwa 0,5 % bis etwa 8 %, wobei das Prepolymer das Reaktionsprodukt

        eines stöchiometrischen Überschusses einer Isocyanat-Komponente, die ein oder mehrere Diisocyanate umfasst, mit
        einer Glycol-Komponente, die eine hochmolekulare Glycol-Komponente umfasst, welche hauptsächlich ein oder mehrere Polyoxypropylenglycole mit äußerst geringer Nichtsättigung umfasst, die jeweils eine Molmasse von 1500 Da bis 20 00 Da und eine Nichtsättigung von weniger als 0,010 Milliäquivalenten/g aufweisen, und
        eines niedermolekularen Diols mit einer Molmasse von weniger als 750 Da, so dass die durchschnittliche Molmasse der Glycol-Komponente 100 Da bis 10 000 Da beträgt,

    umfasst;
    b) das Einführen des Prepolymers (a) in eine Kettenverlängerer-Lösung, die ein oder mehrere aliphatische Diamine und/oder cycloaliphatische Diamine enthält, welche in einem flüchtigen Lösungsmittel gelöst sind;
    c) das Entfernen eines mit einem Amin kettenverlängerten, aus Segmenten bestehenden Polyurethan/Harnstoff-Elastomers von der Kettenverlängerer-Lösung, und
    d) das Verflüchtigen irgendeines restlichen, flüchtigen Lösungsmittels, das in dem mit Amin kettenverlängerten, aus Segmenten bestehenden Polyurethan/Harnstoff-Elastomer enthalten ist.

17. Verfahren zur Vergrößerung des Durchsatzes bei der Herstellung von Folien und Fasern von aus Segmenten bestehenden Polyurethan/Harnstoff-Spandexelastomeren durch Extrusion eines aus Segmenten bestehenden, in einem polaren aprotischen Lösungsmittel gelösten Polyurethan/Harnstoff-Spandexpolymers, worin die Lösung eine maximal-wirksame Verarbeitungsviskosität aufweist, wobei das Verfahren die Auswahl eines Spandex-Polymers gemäß Anspruch 2 als aus Segmenten bestehendes Polyurethan/Harnstoff-Spandexpolymer umfasst, worin die Spandexpolymer-Lösung eine Lösungsviskosität aufweist, die wesentlich geringer ist als diejenige einer ansonsten ähnlichen, von PTMEG-abgeleiteten, aus Segmenten bestehenden Polyurethan/Harnstoff-Polymerlösung mit dem gleichen Feststoffgehalt, so dass der Feststoffgehalt der Spandexpolymer-Lösung auf einen Feststoffgehalt erhöht wird, der höher ist als der maximale Feststoffgehalt des von PTMEG-abgeleiteten, aus Segmenten bestehenden Polyurethan/Harnstoffs, was eine Lösungsviskosität bereitstellt, die kleiner als die maximal wirksame Verarbeitungsviskosität ist oder derselben gleich ist.

18. Verfahren gemäß Anspruch 17, worin die Viskosität der Spandexpolymer-Lösung, die bei 20 Gew.-% Polymerfeststoffen in Dimethylacetamid bei 25 °C bestimmt wurde, geringer als 20 000 Centipoise ist.

19. Verfahren gemäß Anspruch 17, worin die Viskosität der Spandexpolymer-Lösung, die bei 20 Gew.-% Polymerfeststoffen in Dimethylacetamid bei 25 °C bestimmt wurde, geringer als 15 000 Centipoise ist.

20. Verfahren gemäß irgendeinem der Ansprüche 17 bis 19, worin das Polymer eine durchschnittliche Molmasse von 300 000 Da oder mehr hat.

21. Verfahren zur Herstellung eines aus Segmenten bestehenden Polyurethan/Harnstoff-Spandex-Elastomers, umfassend die Umsetzung in Lösung in einem Lösungsmittel

    a) eines Isocyanat-terminierten Prepolymers, das durch Umsetzung eines stöchiometrischen Überschusses eines oder mehrerer Di- oder Polyisocyanate hergestellt wurde, um einen Gehalt an freien NCO-Gruppen des Prepolymers von etwa 0,5 Gew.-% bis etwa 10 Gew.-%, bezogen auf das Gewicht des Prepolymers, bereitzustellen, mit einer Polyol-Komponente, die größtenteils eine Diol-Komponente umfasst, wobei die Diol-Komponente umfasst: 5 Äquivalent-% bis 50 Äquivalent% eines oder mehrerer Polyoxypropylendiole mit äußerst geringer Nichtsättigung und einer Molmasse von mehr als 1500 Da und einer durchschnittlichen Nichtsättigung von weniger als 0,010 Milliäquivalenten, und 95 Äquivalent-% bis etwa 50 Äquivalent-% eines oder mehrerer Polytetramethylenetherglycole mit einer Molmasse von 600 Da bis 6000 Da; mit

b) einem Diamin-Kettenverlängerer, der ein oder mehrere aliphatische Diamine, cycloaliphatische Diamine oder deren Mischungen umfasst, um ein mit einem aliphatischen Diamin und/oder cycloaliphatischen Diamin kettenverlängertes, aus Segmenten bestehendes Spandexelastomer-Reaktionsprodukt zu bilden; und

c) das Entfernen des Lösungsmittels von dem Reaktionsprodukt.

22. Verfahren gemäß Anspruch 21, worin das Isocyanat-terminierte Prepolymer (a) mit dem Kettenverlängerer, (b) in einem polaren aprotischen Lösungsmittel umgesetzt wird, worauf die Verflüchtigung des aprotischen Lösungsmittels erfolgt.

23. Verfahren gemäß Anspruch 21 oder Anspruch 22, worin das Polyoxypropylendiol mit äußerst geringer Nichtsättigung etwa 5 bis etwa 35 Äquivalent-% der Diol-Komponente umfasst.

24. Verfahren gemäß irgendeinem der Ansprüche 21 bis 23, worin das Diol mit äußerst geringer Nichtsättigung eine durchschnittliche Molmasse von etwa 2000 Da bis etwa 8000 Da hat.

25. Verfahren gemäß irgendeinem der Ansprüche 21 bis 24, worin die Polyol-Komponente weiterhin ein monomeres Polyol oder mehrere monomere Polyole mit einer Funktionalität von 3 oder mehr, ein oxyalkyliertes Oligomer derselben oder eine Mischung von monomerem Polyol (monomeren Polyolen) und oxyalkyliertem Oligomer (oxyalkylierten Oligomeren) umfasst, wobei die oxyalkylierten Oligomere durchschnittliche Molmassen von weniger als 500 Da aufweisen.

26. Verfahren gemäß irgendeinem der Ansprüche 21 bis 25, worin der NCO-Gruppen-Gehalt 1,5 Gew.-% bis 4 Gew.-% beträgt.

27. Verfahren gemäß irgendeinem der Ansprüche 21 bis 26, worin das Isocyanat-terminierte Prepolymer (a) mit dem Kettenverlängerer, (b) durch Einführen des Prepolymers in eine Lösung des Kettenverlängerers umgesetzt wird.

28. Verfahren gemäß Anspruch 27, worin die Lösung des Kettenverlängerers ein flüchtiges Lösungsmittel enthält.

29. Verfahren gemäß Anspruch 28, worin das flüchtige Lösungsmittel aus der aus Wasser und Toluol bestehenden Gruppe ausgewählt ist.

30. Aus Segmenten bestehendes Polyurethan/Polyharnstoff-Spandexpolymer, welches durch das Verfahren gemäß irgendeinem der Ansprüche 21 bis 29 erhalten wurde.

31. Verfahren zur Reduktion von PTMEG, das in den Weichsegmenten von aus Segmenten bestehenden Polyurethan/Harnstoff-Spandexpolymeren enthalten ist, ohne dass ein wesentlicher Verlust an Entspannungsenergie oder prozentualer bleibender Verformung eintritt, oder zur Reduktion der Viskosität von Isocyanat-terminierten PTMEG-Prepolymeren, die durch die Umsetzung eines stöchiometrischen Überschusses eines oder mehrerer Di- oder Polyisocyanate mit PTMEG hergestellt werden, wobei das Verfahren umfasst, dass man 5 Äquivalent-% bis 50 Äquivalent-% PTMEG durch ein oder mehrere Polyoxypropylenpolyole mit äußerst geringer Nichtsättigung und Molmassen von 1500 Da bis 20 000 Da und einer durchschnittlichen Nichtsättigung von weniger als 0,010 Milliäquivalenten ersetzt.

32. Verfahren zur Herstellung eines aus Segmenten bestehenden Polyurethan/Harnstoff-Elastomers vom Spandextyp, umfassend die Herstellung einer Lösung in einem aprotischen Lösungsmittel

(a) eines Isocyanat-terminierten Prepolymers, das durch Umsetzung eines stöchiometrischen Überschusses eines oder mehrerer Di- und/oder Polyisocyanate mit einer Polyoxypropylendiol-Komponente, welche eine Molmasse von mehr als 2000 Da und eine Nichtsättigung von 0,010 Milliäquivalenten oder weniger aufweist, hergestellt wurde, wobei die Polyoxypropylendiol-Komponente größtenteils ein oder mehrere Polyoxypropylendiole mit äußerst geringer Nichtsättigung und einer Nichtsättigung von weniger als 0,010 Milliäquivalenten/g und einer Molmasse von etwa 2500 Da bis etwa 20 000 Da umfasst, das Isocyanat-terminierte Prepolymer einen Gehalt an Isocyanatgruppen von etwa 0,5 Gew.-% bis etwa 10 Gew.-% aufweist, und

b) die Kettenverlängerung des Isocyanat-terminierten Prepolymers mit einer aliphatischen und/oder cycloaliphatischen Diamin-Komponente, um ein aus Segmenten bestehendes Polyurethan/Harnstoff-Elastomer herzustellen.

**33.** Verfahren gemäß Anspruch 32, worin das Polyoxypropylendiol mit äußerst geringer Nichtsättigung eine Nichtsättigung von weniger als 0,007 Milliäquivalenten/g aufweist.

**34.** Verfahren gemäß Anspruch 32 oder Anspruch 33, worin eines oder mehrere der Polyoxypropylendiole mit äußerst geringer Nichtsättigung ein Zahlenmittel der Molmasse von 3000 Da bis 8000 Da aufweist (aufweisen).

**35.** Verfahren gemäß Anspruch 32 oder Anspruch 33, worin eines oder mehrere der Polyoxypropylendiole mit äußerst geringer Nichtsättigung ein Zahlenmittel der Molmasse von 4000 Da bis 8000 Da aufweist (aufweisen).

**36.** Verfahren gemäß irgendeinem der Ansprüche 32 bis 35, worin das aliphatische Diamin Ethylendiamin umfasst.

**37.** Verfahren gemäß irgendeinem der Ansprüche 32 bis 35, worin das aliphatische und/oder cycloaliphatische Diamin eine Mischung von Ethylendiamin und wenigstens einem weiteren aliphatischen Diamin und/oder cycloaliphatische Diamin umfasst.

**38.** Verfahren gemäß irgendeinem der Ansprüche 31 bis 36, worin eines oder mehrere der Di- oder Polyisocyanate Methylendiphenylendiisocyanat und Isophorondiisocyanat umfasst (umfassen).

**39.** Verfahren gemäß irgendeinem der Ansprüche 32 bis 38, worin die Polyoxypropylendiol-Komponente eine Nichtsättigung von weniger als 0,010 Milliäquivalenten/g aufweist.

**40.** Verfahren gemäß irgendeinem der Ansprüche 32 bis 39, worin das Isocyanat-terminierte Prepolymer einen Gehalt an Isocyanatgruppen von etwa 2 bis etwa 4 Gew.-% aufweist.

**41.** Modifizierung des gemäß irgendeinem der Ansprüche 32 bis 39 beanspruchten Verfahrens, umfassend das Spinnen des Isocyanat-terminierten Prepolymers (a) in eine Kettenverlängerer-Lösung, (b) die ein oder mehrere aliphatische Diamin- und/oder cycloaliphatische Diamin-Kettenverlängerer enthält, die in einem flüchtigen Lösungsmittel gelöst sind, um ein kettenverlängertes Spandex-Elastomer zu bilden; und
(c) das Entfernen des kettenverlängerten Elastomers aus der Lösung (b).

**42.** Verfahren gemäß irgendeinem der Ansprüche 32 bis 41, das weiterhin die Extrusion des aus Segmenten bestehenden Polyurethan-Harnstoff-Elastomers umfasst, um eine Spandexfaser durch ein Verfahren zu bilden, das aus der aus Lösungstrockenspinnverfahren und Lösungsnassspinnverfahren bestehenden Gruppe ausgewählt ist.

**43.** Spandex-Elastomer, welches durch ein Verfahren gemäß irgendeinem der Ansprüche 32 bis 42 erhalten wird.

**44.** Elastomer gemäß Anspruch 42, das eine bleibende Verformung von weniger als etwa 30 % aufweist.

**45.** Elastomer gemäß Anspruch 42 oder Anspruch 43, das eine Zugfestigkeit aufweist, die größer als 20,7 MPa (3000 psi) ist.

**46.** Elastomer gemäß den Ansprüchen 43, 44 oder 45, das eine Dehnung aufweist, die größer als 900 % ist.


**Revendications**

**1.** Elastomère de polyuréthane/urée segmentaire obtenu par réaction en solution de (a) un prépolymère isocyanate obtenu par réaction d'un excès stoechiométrique d'un ou plusieurs di- et/ou polyisocyanates avec un composant polyol avec (b) un agent d'allongement de chaîne diamine comprenant au moins une diamine choisie parmi les diamines aliphatiques et les diamines cycloaliphatiques, caractérisé en ce que le composant polyol comprend de 100 à 5 % équivalents d'un composant glycol et de 0 à 95 % équivalents d'un ou plusieurs polytétraméthylène-étherglycols et le composant glycol comprend au moins un polyoxypropylène-diol à insaturation ultra faible ayant une masse moléculaire supérieure à 1500 Da et une insaturation moyenne inférieure à 0,010 méq/g, éventuellement en mélange avec une quantité mineure d'un diol de faible masse moléculaire ayant une masse moléculaire inférieure à 750 Da, la masse moléculaire moyenne dudit composant glycol étant de 1000 Da à 10000 Da, à la condition que lorsque le composant glycol ne contient pas du tout dudit diol de faible masse moléculaire, ledit composant glycol ait une masse moléculaire dépassant 2000 Da et une insaturation inférieure à 0,010 méq/g et comprennent en majeure partie un ou plusieurs polyoxypropylène-diols à insaturation ultra faible ayant une insaturation inférieure à 0,010 méq/g et une masse moléculaire située dans la plage allant de 2500 à 20000 Da.

2. Procédé pour la préparation d'un élastomère Spandex de polyuréthane/urée segmentaire à allongement diamine aliphatique et/ou diamine cycloaliphatique, comprenant la mise en contact d'un ou plusieurs agents d'allongement de chaîne diamines comprenant sensiblement une ou plusieurs diamines aliphatiques et/ou diamines cycloaliphatiques avec une solution d'un prépolymère à terminaison isocyanate dans un solvant aprotique, ledit prépolymère à terminaison isocyanate comprenant le produit de la réaction de :

   a) un excès stoechiométrique d'un composant isocyanate comprenant un ou plusieurs diisocyanates ;
   b) un composant glycol comprenant

    bi) un composant glycol de masse moléculaire élevée comprenant, en majeure partie, un ou plusieurs polyoxypropylène-glycols à insaturation ultra faible ayant une masse moléculaire entre 1500 Da et 20000 Da et une insaturation -inférieure à 0,010 méq/g, et
    bii) un diol de faible masse moléculaire ayant une masse moléculaire inférieure à 750 Da, de façon que la masse moléculaire moyenne dudit composant glycol soit de 1000 Da à 10000 Da, pour former un polymère élastomère Spandex de polyuréthane/urée à allongement de chaîne diamine.

3. Procédé selon la revendication 2, dans lequel ladite étape de mise en contact comprend l'addition d'une ou plusieurs diamines aliphatiques et/ou diamines cycloaliphatiques à ladite solution dudit prépolymère à terminaison isocyanate dans un solvant aprotique.

4. Procédé selon la revendication 2, dans lequel lesdites diamines aliphatiques et/ou diamines cycloaliphatiques, avant ladite étape de mise en contact, sont dissoute dans une autre quantité dudit solvant aprotique ou d'un solvant miscible avec ledit solvant aprotique.

5. Procédé selon l'une quelconque des revendications 2 à 4, comprenant en outre l'extrusion dudit polymère élastomère Spandex dans une filière formant des fibres.

6. Procédé selon l'une quelconque des revendications 2 à 5, dans lequel au moins l'un desdits polyoxypropylène-diols à insaturation ultra faible a une masse moléculaire entre 2000 Da et 10000 Da.

7. Procédé selon l'une quelconque des revendications 2 à 6, dans lequel ladite ou lesdites diamines aliphatiques et/ou diamines cycloaliphatiques comprennent en majeure partie de l'éthylènediamine.

8. Procédé selon l'une quelconque des revendications 2 à 7, dans lequel ledit polyoxypropylène-glycol comprend un polyoxypropylène-glycol ayant une insaturation de 0,007 méq/g ou moins.

9. Procédé selon l'une quelconque des revendications 2 à 7, dans lequel ledit polyoxypropylène-glycol comprend un polyoxypropylène-glycol ayant une insaturation de 0,005 méq/g.

10. Procédé selon l'une quelconque des revendications 2 à 9, dans lequel ledit composant glycol a une insaturation moyenne inférieure à 0,010 méq/g.

11. Procédé selon l'une quelconque des revendications 2 à 10, dans lequel ledit diol de faible masse moléculaire a une masse moléculaire inférieure à 500 Da.

12. Procédé selon l'une quelconque des revendications 2 à 10, dans lequel ledit diol de faible masse moléculaire a une masse moléculaire inférieure à 200 Da.

13. Procédé selon la revendication 2, dans lequel le prépolymère à terminaison isocyanate est le produit de la réaction d'un excès stoechiométrique d'un composant isocyanate comprenant un ou plusieurs diisocyanates avec un mélange de polyols comprenant un ou plusieurs polyoxypropylène-glycols à insaturation ultra faible de masse moléculaire élevée et un ou plusieurs diols de faible masse moléculaire ayant une masse moléculaire inférieure à 750 Da, ledit ou lesdits polyoxypropylène-glycols à insaturation ultra faible ayant une masse moléculaire de 2000 Da à 10000 Da et une insaturation de 0,007 méq/g ou moins, ledit mélange ayant une masse moléculaire moyenne de 1500 Da à 3000 Da.

14. Elastomère de polyuréthane/urée segmentaire obtenu par le procédé selon l'une quelconque des revendications 2 à 13.

15. Elastomère selon la revendication 14, dans lequel le prépolymère à terminaison isocyanate a une teneur en groupes NCO libres d'environ 0,5 % à environ 8 %.

16. Procédé de filage par réaction pour la production d'un élastomère de polyuréthane segmentaire à allongement amine, comprenant :

   a) le choix d'un prépolymère à terminaison isocyanate ayant une teneur en groupes NCO libres d'environ 0,5 % à environ 8 % en poids, ledit prépolymère comprenant le produit de la réaction de :

   un excès stoechiométrique d'un composant isocyanate comprenant un ou plusieurs diisocyanates ; avec un composant glycol comprenant un composant glycol de masse moléculaire élevée comprenant, en majeure partie, un ou plusieurs polyoxypropylène-glycols à insaturation ultra faible ayant individuellement une masse moléculaire entre 1500 Da et 20000 Da et une insaturation inférieure à 0,010 méq/g, et un diol de faible masse moléculaire ayant une masse moléculaire inférieure à 750 Da, de façon que la masse moléculaire moyenne dudit composant glycol soit de 1000 Da à 10000 Da ;

   b) l'introduction dudit prépolymère (a) dans une solution d'agent d'allongement de chaîne contenant une ou plusieurs diamines aliphatiques et/ou diamines cycloaliphatiques dissoutes dans un solvant volatil ;
   c) le retrait depuis ladite solution d'agent d'allongement de chaîne d'un élastomère de polyuréthane/urée segmentaire à allongement amine ; et
   d) l'évaporation de tout solvant résiduel contenu dans ledit élastomère de polyuréthane segmentaire à allongement amine.

17. Procédé pour augmenter le rendement dans la préparation de films ou fibres d'élastomères Spandex de polyuréthane/urée segmentaires par extrusion d'un polymère Spandex de polyuréthane/urée segmentaire dissous dans un solvant aprotique polaire, ladite solution ayant une viscosité de mise en oeuvre effective maximale, ledit procédé comprenant le choix, en tant que dit polymère Spandex de polyuréthane/urée segmentaire, d'un polymère Spandex selon la revendication 2, où ladite solution de polymère Spandex a une viscosité en solution sensiblement inférieure à une solution de polymère de polyuréthane/urée segmentaire dérivant de PTMEG et par ailleurs similaire, ayant la même teneur en extrait sec, de façon que la teneur en extrait sec de ladite solution de polymère Spandex soit augmentée à une teneur en extrait sec supérieure à la teneur en extrait sec maximale dudit polyuréthane/urée segmentaire dérivant de PTMEG qui donne une viscosité en solution inférieure ou égale à ladite viscosité de mise en oeuvre effective maximale.

18. Procédé selon la revendication 17, dans lequel ladite viscosité en solution de polymère Spandex déterminée à 20 % en poids d'extrait sec polymère dans du diméthylacétamide à 25°C est inférieure à 20000 cP.

19. Procédé selon la revendication 17, dans lequel ladite viscosité en solution de polymère Spandex déterminée à 20 % en poids d'extrait sec polymère dans du diméthylacétamide à 25°C est inférieure à 15000 cP.

20. Procédé selon l'une quelconque des revendications 17 à 19, dans lequel ledit polymère a une masse moléculaire moyenne en masse de 300 000 Da ou plus.

21. Procédé pour la préparation d'un élastomère Spandex de polyuréthane/urée segmentaire, comprenant la réaction en solution dans un solvant :

   a) d'un prépolymère à terminaison isocyanate préparé par réaction d'un excès stoechiométrique d'un ou plusieurs di- ou polyisocyanates, de façon à donner une teneur en groupes NCO libres dudit prépolymère d'environ 0,5 % en poids à environ 10 % en poids par rapport au poids du prépolymère, avec un composant polyol comprenant en majeure partie un composant diol, ledit composant diol comprenant de 5 % équivalents à 50 % équivalents d'un ou plusieurs polyoxypropylène-diols à insaturation ultra faible ayant une masse moléculaire dépassant 1500 Da et une insaturation moyenne inférieure à 0,010 méq/g, et de 95 % équivalents à 50 % équivalents d'un ou plusieurs polytétraméthylène-étherglycols ayant une masse moléculaire de 600 Da à 6000 Da ; avec

b) un agent d'allongement de chaîne de type diamine comprenant une ou plusieurs diamines aliphatiques, diamines cycloaliphatiques, ou leurs mélanges, pour former un produit réactionnel élastomère Spandex à chaîne allongée diamine aliphatique et/ou diamine cycloaliphatique ; et

c) l'élimination dudit solvant depuis ledit produit réactionnel.

**22.** Procédé selon la revendication 21, dans lequel ledit prépolymère à terminaison isocyanate (a) est mis à réagir avec ledit agent d'allongement de chaîne (b) dans un solvant aprotique polaire, opération suivie d'une évaporation dudit solvant aprotique.

**23.** Procédé selon la revendication 21 ou la revendication 22, dans lequel ledit polyoxypropylène-diol à insaturation ultra faible comprend d'environ 5 à environ 35 % équivalents dudit composant diol.

**24.** Procédé selon l'une quelconque des revendications 21 à 23, dans lequel ledit diol à insaturation ultra faible a une masse moléculaire moyenne d'environ 2000 Da à environ 8000 Da.

**25.** Procédé selon l'une quelconque des revendications 21 à 24, dans lequel ledit composant polyol comprend en outre un ou plusieurs polyols ayant une fonctionnalité de 3 ou plus, un oligomère oxyalkylé de ceux-ci, ou un mélange d'un ou plusieurs polyols monomères et d'un ou plusieurs oligomères oxyalkylés, lesdits oligomères oxyalkylés ayant des masses moléculaires moyennes inférieures à 500 Da.

**26.** Procédé selon l'une quelconque des revendications 21 à 25, dans lequel ladite teneur en groupes NCO est de 1,5 % en poids à 4 % en poids.

**27.** Procédé selon l'une quelconque des revendications 21 à 26, dans lequel ledit prépolymère à terminaison isocyanate (a) est mis à réagir avec ledit agent d'allongement de chaîne (b) par introduction dudit prépolymère dans une solution d'agent d'allongement de chaîne.

**28.** Procédé selon la revendication 27, dans lequel ladite solution d'agent d'allongement de chaîne contient un solvant volatil.

**29.** Procédé selon la revendication 28, dans lequel ledit solvant volatil est choisi dans l'ensemble constitué par l'eau et le toluène.

**30.** Polymère Spandex de polyuréthane/polyurée segmentaire obtenu par le procédé selon l'une quelconque des revendications 21 à 29.

**31.** Procédé pour la réduction de PTMEG contenu dans les segments mous de polymères Spandex de polyuréthane/urée segmentaires sans perte sensible de pouvoir de relâchement ou de pourcentage de rémanence, ou pour la réduction de viscosité de prépolymères de PTMEG à terminaison isocyanate préparés par réaction d'un excès stoechiométrique d'un ou plusieurs di- ou polyisocyanates avec du PTMEG, ledit procédé comprenant le remplacement de 5 % équivalents à 50 % équivalents de PTMEG par un ou plusieurs polyoxypropylène-polyols à insaturation ultra faible ayant des masses moléculaires de 1500 Da à 20000 Da et une insaturation moyenne inférieure à 0,010 méq/g.

**32.** Procédé pour la préparation d'un élastomère de type Spandex de polyuréthane/urée, comprenant :

la préparation d'une solution dans un solvant aprotique de (a) un prépolymère à terminaison isocyanate préparé par réaction d'un excès stoechiométrique d'un ou plusieurs di- et/ou polyisocyanates avec un composant polyoxypropylène-diol ayant une masse moléculaire dépassant 2000 Da et une insaturation de 0,010 meq/g ou moins, ledit composant polyoxypropylène-diol comprenant dans sa plus grande partie un ou plusieurs polyoxypropylène-diols à insaturation ultra faible ayant une insaturation inférieure à 0,010 méq/g, et une masse moléculaire d'environ 2500 Da à environ 20000 Da, ledit prépolymère à terminaison isocyanate ayant une teneur en groupes isocyanate d'environ 0,5 % en poids à environ 10 % en poids ; et

b) l'allongement de chaîne dudit prépolymère à terminaison isocyanate avec un composant diamine aliphatique et/ou cycloaliphatique pour former un élastomère de polyuréthane/urée segmentaire.

**33.** Procédé selon la revendication 32, dans lequel ledit polyoxypropylène-diol à insaturation ultra faible a une insaturation inférieure à 0,007 méq/g.

**34.** Procédé selon la revendication 32 ou la revendication 33, dans lequel ledit ou lesdits polyoxypropylène-diols à insaturation ultra faible ont une masse moléculaire moyenne en nombre de 3000 Da à 8000 Da.

**35.** Procédé selon la revendication 32 ou la revendication 33, dans lequel ledit ou lesdits polyoxypropylène-diols à insaturation ultra faible ont une masse moléculaire moyenne en nombre de 4000 Da à 8000 Da.

**36.** Procédé selon l'une quelconque des revendications 32 à 35, dans lequel ladite diamine aliphatique comprend de l'éthylènediamine.

**37.** Procédé selon l'une quelconque des revendications 32 à 35, dans lequel ladite diamine aliphatique et/ou cycloaliphatique comprend un mélange d'éthylènediamine et d'au moins une autre diamine aliphatique et/ou diamine cycloaliphatique.

**38.** Procédé selon l'une quelconque des revendications 31 à 36, dans lequel ledit ou lesdits di-ou polyisocyanates comprennent du méthylène-diphénylène-diisocyanate et de l'isophorone-diisocyanate.

**39.** Procédé selon l'une quelconque des revendications 32 à 38, dans lequel ledit composant polyoxypropylène-diol a une insaturation inférieure à 0,010 méq/g.

**40.** Procédé selon l'une quelconque des revendications 32 à 39, dans lequel ledit prépolymère à terminaison isocyanate a une teneur en groupes isocyanate d'environ 2 à environ 4 % en poids.

**41.** Modification du procédé revendiqué dans l'une quelconque des revendications 32 à 39, qui comprend le filage dudit prépolymère à terminaison isocyanate (a) dans une solution d'agent d'allongement de chaîne (b) contenant un ou plusieurs agents d'allongement de chaîne diamine aliphatique et/ou diamine cycloaliphatique dissous dans un solvant volatil; pour former un élastomère Spandex à chaîne allongée ; et c) le retrait dudit élastomère à chaîne allongée depuis ladite solution b).

**42.** Procédé selon l'une quelconque des revendications 32 à 41, comprenant en outre l'extrusion dudit élastomère de polyuréthane/urée segmentaire pour former une fibre de Spandex par un procédé choisi dans l'ensemble constitué par un filage à sec en solution, et un filage à l'état humide en solution.

**43.** Elastomère Spandex obtenu par un procédé tel que revendiqué dans l'une quelconque des revendications 32 à 42.

**44.** Elastomère selon la revendication 42, ayant un pourcentage de rémanence inférieur à environ 30 %.

**45.** Elastomère selon la revendication 42 ou 43, ayant une résistance à la traction supérieure à 20,7 MPa (3000 psi).

**46.** Elastomère selon la revendication 43, 44 ou 45, ayant un allongement supérieur à 900 %.

Fig.1.

# Fig.2.

# Fig.3.

# Fig.4.

PERCENT SET

UNLOAD POWER

TENSILE

MOLE % MONOL

# Fig.5.

STRESS (PSI)

% ELONGATION